(19) Europäisches Patentamt
European Patent Office
Office européen des brevets

(11) EP 4 411 894 A1

(12) **EUROPEAN PATENT APPLICATION**
published in accordance with Art. 153(4) EPC

(43) Date of publication:
**07.08.2024 Bulletin 2024/32**

(21) Application number: **21958932.2**

(22) Date of filing: **30.09.2021**

(51) International Patent Classification (IPC):
***H01M 4/62*** *(2006.01)* ***H01M 4/13*** *(2010.01)*
***H01M 10/0525*** *(2010.01)*

(86) International application number:
**PCT/CN2021/122316**

(87) International publication number:
**WO 2023/050360 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventor: **WANG, Kefei**
**Ningde, Fujian 352100 (CN)**

(74) Representative: **Klunker IP Patentanwälte PartG mbB**
**Destouchesstraße 68**
**80796 München (DE)**

# (54) ELECTROCHEMICAL DEVICE AND ELECTRONIC DEVICE COMPRISING SAME

(57) This application relates to an electrochemical device and an electronic device including the same. The electrochemical device of this application includes a positive electrode, a negative electrode, and an electrolyte. The positive electrode includes a positive electrode current collector and a positive electrode active material region, an insulation region, and an interaction region, where the positive electrode active material region, the insulation region, and the interaction region are located on the positive electrode current collector. The interaction region is located between the positive electrode active material region and the insulation region and connects to the positive electrode active material region and the insulation region. The positive electrode active material region includes a positive electrode active material. The insulation region includes an inorganic filler. The interaction region includes both the positive electrode active material and the inorganic filler. The electrolyte includes at least one of a cyano-containing compound or a sulfur-oxygen double bond containing compound. The electrochemical device provided in this application has improved intermittent cycling performance and safety performance at high temperature and high pressure.

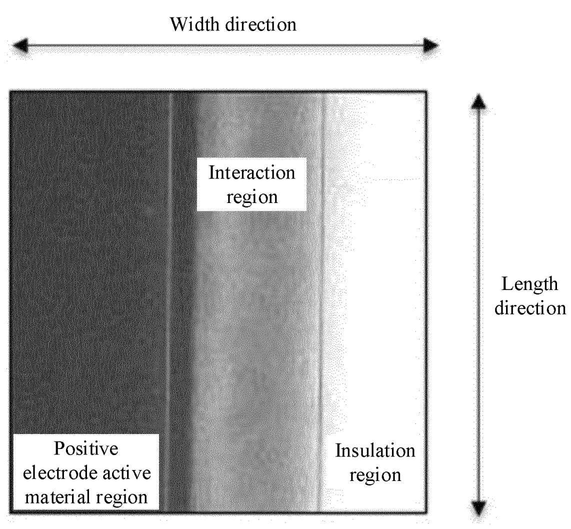


FIG. 1

EP 4 411 894 A1

## Description

### TECHNICAL FIELD

This application relates to the field of energy storage, specifically to an electrochemical device and an electronic device containing the same, and in particular to a lithium-ion battery.

### BACKGROUND

Lithium-ion batteries are widely applied to electric vehicles and consumer electronic products due to their advantages such as high energy density, high output power, long cycle life, and little environmental pollution. However, lithium-ion batteries are likely to catch fire or explode under abnormal conditions such as compression, collision, or puncturing, posing a significant safety risk. Therefore, the safety issue of lithium-ion batteries has greatly limited the application and popularity of lithium-ion batteries.

When an internal short circuit occurs in a battery due to abnormal conditions such as collision, compression, or puncturing, the temperature of the battery rises. In the prior art, a technical solution in which a low-melting-point alloy is added into a metal current collector material is adopted. When the temperature of the battery rises, the low-melting-point alloy in the current collector melts, causing circuit disconnection in the electrode plate, so that current is cut off and thus the safety of the battery is improved. Alternatively, a multi-layered current collector with metal layers composited on two surfaces of a resin layer. When the temperature of the battery rises to the melting point of the resin layer material, the resin layer of the current collector melts, damaging the electrode plate, so that the current is cut off and thus the safety of the battery is improved.

However, these methods in the prior art can neither effectively prevent occurrence of an internal short circuit in lithium-ion batteries nor ensure that the battery can continue to operate under abnormal conditions. Therefore, it is necessary to provide a battery design that can effectively prevent accidents such as fire and explosion caused by an internal short circuit of a battery under abnormal conditions such as collision, compression, or puncturing, without affecting normal operation of the battery.

### SUMMARY

This application provides an electrochemical device and an electronic device capable of improving the intermittent cycling performance of the electrochemical device at high temperature and high pressure and effectively improving the safety performance under high voltage, so as to solve the problems existing in the prior art to some extent.

In an embodiment, this application provides an electrochemical device. The electrochemical device includes a positive electrode, a negative electrode, and an electrolyte. The positive electrode includes a positive electrode current collector and a positive electrode active material region, an insulation region, and an interaction region, where the positive electrode active material region, the insulation region, and the interaction region are located on the positive electrode current collector. The interaction region is located between the positive electrode active material region and the insulation region and connects to the positive electrode active material region and the insulation region. The positive electrode active material region includes a positive electrode active material. The insulation region includes an inorganic filler. The interaction region includes both the positive electrode active material and the inorganic filler. The electrolyte includes at least one of a cyano-containing compound or a sulfur-oxygen double bond containing compound.

In some embodiments, the electrolyte includes the cyano-containing compound and the sulfur-oxygen double bond containing compound, and based on mass of the electrolyte, a mass percentage of the cyano-containing compound is a% and a mass percentage of the sulfur-oxygen double bond containing compound is b%, where $0.1 \leq a+b \leq 15$ and $0.5 \leq a/b \leq 20$.

In some embodiments, mass of the positive electrode active material region is $A_1$ mg/1540.25 $mm^2$, mass of the insulation region is $A_2$ mg/1540.25 $mm^2$, and $A_1$ and $A_2$ satisfy $A_1/A_2>1.2$.

In some embodiments, mass of the positive electrode active material region is $A_1$ mg/1540.25 $mm^2$, and $A_1$ ranges from 100 to 400.

In some embodiments, based on mass of the insulation region, a mass percentage of the inorganic filler in the insulation region is $M_1$%, and mass of the insulation region is $A_2$ g/1540.25 $mm^2$, where $M_1$ and $A_2$ satisfy $0.3 \leq M_1/A_2 \leq 1.5$.

In some embodiments, mass of the positive electrode active material region is $A_1$ mg/1540.25 $mm^2$, and based on mass of the electrolyte, a mass percentage of the cyano-containing compound is a%, where $A_1$ and a satisfy $A_d/a>8$.

In some embodiments, the inorganic filler includes at least one of silicon dioxide, alumina, hydrated alumina, titanium oxide, magnesium oxide, magnesium hydroxide, alumina-doped silicon dioxide, or boehmite.

In some embodiments, the cyano-containing compound includes at least one of succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-heptanedionitrile, 1,4-bis(cyanoethoxy) butane, diethylene glycol di(2-cyanoethyl) ether, triethylene glycol di(2-cyanoethyl) ether, tetraethylene glycol di(2-cyanoethyl) ether, 1,3-di(2-cyanoethoxy)propane, 1,4-di(2-cyanoethoxy) butane, 1,5-di(2-cyanoethoxy) pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3 -diethyl-2-butene, 1,6-dicyano-3-hexene, 1,6-dicyano-2-methyl-3-hexene, 1,3,5-pentanetricarbonitrile, 1,2,3-propanetricarbonitrile , 1,3,6-hexanetricarbonitrile, 1,2,6-hexanetricarbonitrile, 1,2,3-tris(2-cyanoethoxy)propane, 1,2,4-tris(2-cyano) ethoxy)butane, 1,1,1-tris(cyanoethoxymethylene)ethane, 1,1,1 -tris(cyanoethoxymethylene)propane, 3-methane 1,3,5-tris(cyanoethoxy)pentane, 1,2,7-tris(cyanoethoxy)heptane, 1,2,6-tris(cyanoethoxy) hexane, or 1,2,5-tris(cyanoethoxy)pentane; where based on mass of the electrolyte, a mass percentage of the cyano-containing compound is a%, and a ranges from 0.1 to 15.

In some embodiments, the cyano-containing compound includes at least two dinitrile compounds.

In some embodiments, the cyano-containing compound includes at least a dinitrile compound and a trinitrile compound.

In some embodiments, the cyano-containing compound includes at least an ether bond containing dinitrile compound and an ether bond containing trinitrile compound.

In some embodiments, the sulfur-oxygen double bond containing compound includes at least one of the following compounds: bicyclic sulfate, bicyclic sultone, vinyl sulfate, propylene sulfate, 1,3-propanesultone, 1,3-propenesultone, methylene methanedisulfonate, or ethylene methanedisulfonate; where based on mass of the electrolyte, a mass percentage of the sulfur-oxygen double bond containing compound is b%, and b ranges from 0.001 to 8.

In some embodiments, the sulfur-oxygen double bond containing compound includes a compound of formula 1:

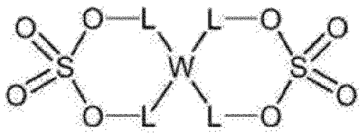 formula 1,

where

W is selected from

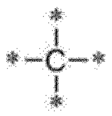, 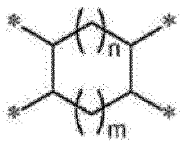, 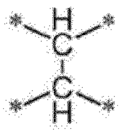,

or

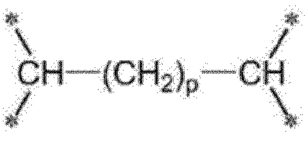;

each instance of L is independently selected from single bond or methylene group, and m is 1, 2, 3, or 4; and n is 0, 1, or 2, and p is 0, 1, 2, 3, 4, 5, or 6.

In some embodiments, the compound of formula 1 in the electrolyte includes at least one of the following compounds:

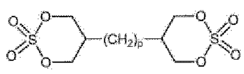 formula 1-2 or 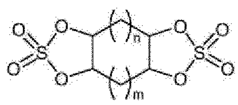 formula 1-3.

In some embodiments, the compound of formula 1 includes at least one of the following compounds:

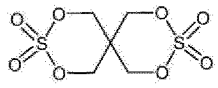 formula 1-1, 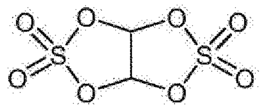 formula 1-4,

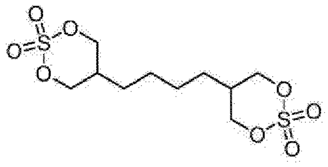 formula 1-5,

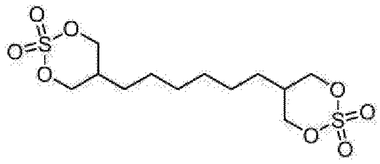 formula 1-6,

or

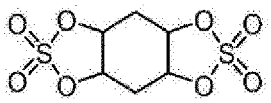 formula 1-7.

In some embodiments, the bicyclic sultone includes a compound of formula 2:

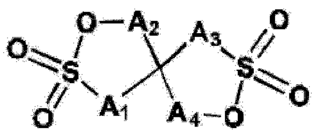 formula 2,

where $A_1$, $A_2$, $A_3$, and $A_4$ are each independently selected from a substituted or unsubstituted alkylene group; where when $A_1$, $A_2$, $A_3$, and $A_4$ are each independently substituted, a substituent is selected from halogen, alkyl, or halogen-substituted alkyl.

In some embodiments, the compound of formula 2 includes at least one of the following compounds:

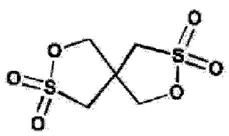 formula 2-1, 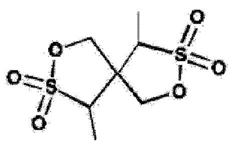 formula 2-2,

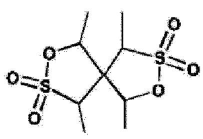 formula 2-4, 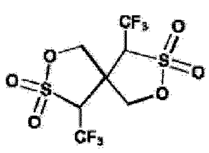 formula 2-5,

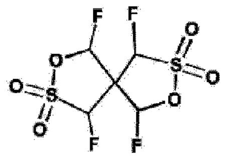 formula 2-6, 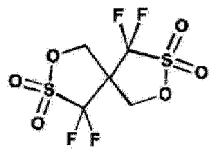 formula 2-7,

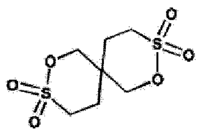 formula 2-8, or 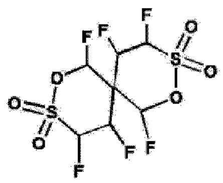 formula 2-9.

In some embodiments, the positive electrode active material region includes polyol.

In some embodiments, the polyol includes at least one of the following compounds: methylene glycol, ethylene glycol, propylene glycol, isoprene glycol, 1,3-butylene glycol, 1,4-butylene glycol, diethylene glycol, dipropylene glycol, polyethylene glycol, polypropylene glycol, glycerol, diglycerol, or polyglycerol.

In another embodiment, this application provides an electronic device including the electrochemical device according to some embodiments of this application.

The electrochemical device provided in this application has improved intermittent cycling performance and safety performance at high temperature and high pressure.

Additional aspects and advantages of some embodiments of this application are partly described and presented in subsequent descriptions, or explained by implementation of some embodiments of this application.

## BRIEF DESCRIPTION OF DRAWINGS

FIG. 1 is a diagram of a positive electrode surface according to an example of this application;
FIG. 2 is a schematic structural diagram of a positive electrode surface according to a comparative example of this application;
FIG. 3 is a schematic structural diagram of a positive electrode surface according to an example of this application; and
FIG. 4 is a schematic structural diagram of a positive electrode surface according to an example of this application.

## DESCRIPTION OF EMBODIMENTS

Some embodiments of this application are described in detail below. Some embodiments of this application should not be construed as a limitation on this application.

In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.

In specific embodiments and claims, a list of items connected by the terms "one of", "one piece of", "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may contain a single element or a plurality of elements. The item B may contain a single element or a plurality of elements. The item C may contain a single element or a plurality of elements.

In the specific embodiments and claims, an item list connected by the terms "at least one of", "at least one piece of", "at least one kind of" or other similar terms may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.

## I. Electrochemical device

In some embodiments, this application provides an electrochemical device. The electrochemical device includes a positive electrode, a negative electrode, and an electrolyte.

## I. Positive electrode

In some embodiments, the positive electrode includes a positive electrode current collector and a positive electrode active material region located on one or two surfaces of the positive electrode current collector.

In some embodiments, the positive electrode active material region includes a positive electrode active material. There may be one or a plurality of positive electrode active material region layers, and each of the plurality of positive electrode active material region layers may contain the same or different positive electrode active materials. The positive electrode active material is any material capable of reversibly intercalating and deintercalating metal ions such as lithium ions. In some embodiments, a discharge capacity of the positive electrode active material is less than a rechargeable capacity of the positive electrode active material to prevent lithium metal from unexpectedly precipitating onto the negative electrode during charging.

In some embodiments, the positive electrode current collector has an exposed current collector portion without a positive electrode active material region, and an exposed positive electrode current collector portion extends outward from one end of a wound electrode body in a winding axis direction (that is, in a sheet width direction orthogonal to a length direction). The exposed positive electrode current collector portion connects to the positive electrode current collector.

In some embodiments, the positive electrode includes an insulation region formed on the positive electrode current collector and an interaction region formed on the positive electrode current collector. In some embodiments, the insulation region is disposed along an end of the positive electrode active material region on the side of the exposed positive electrode current collector portion, and the insulation region extends along the length direction of the positive electrode. In some embodiments, the insulation region is located between the positive electrode active material region and the exposed positive electrode current collector portion in the width direction of the positive electrode. In some embodiments, the exposed positive electrode current collector portion is covered by the insulation region.

In some embodiments, the interaction region is located at the boundary between the insulation region and the positive electrode active material region, and the interaction region extends along the length direction of the positive electrode. Therefore, the interaction region is located between the positive electrode active material region and the insulation region. In addition, the interaction region connects to the positive electrode active material region and the insulation region.

FIG. 1 is a diagram of a positive electrode surface according to an example of this application; It can be seen from FIG. 1 that the interaction region is located between the positive electrode active material region and the insulation region and extends along the length direction of the positive electrode.

FIG. 2 is a schematic structural diagram of a positive electrode surface in a comparative example of this application, where 200 is the positive electrode surface, 210 is the positive electrode active material region on the positive electrode current collector, and 220 is the exposed portion of the positive electrode current collector. In this example, the exposed portion of the positive electrode current collector is not covered.

FIG. 3 is a schematic structural diagram of a positive electrode surface in an example of this application, where 300 is the positive electrode surface, 310 is the positive electrode active material region on the positive electrode current collector, 320 is the interaction region on the positive electrode current collector, and 330 is the insulation region on the positive electrode current collector. In this example, the interaction region is located between the positive electrode active material region and the insulation region and connects to the positive electrode active material region and the insulation region, and the current collector is covered completely.

FIG. 4 is a schematic structural diagram of a positive electrode surface in an example of this application, where 400 is the positive electrode surface, 410 is the positive electrode active material region on the positive electrode current collector, 420 is the interaction region on the positive electrode current collector, 430 is the insulation region on the positive electrode current collector, and 440 is the exposed portion of the positive electrode current collector. In this example, the exposed portion of the positive electrode current collector is not completely covered.

In some embodiments, mass of the positive electrode active material region is $A_1$ mg/1540.25 mm$^2$, mass of the insulation region is $A_2$ mg/1540.25 mm$^2$, and $A_1$ and $A_2$ satisfy $A_1/A_2>1.2$.

In some embodiments, $A_1/A_2\geq2$, $A_1/A_2\geq2.5$, $A_1/A_2\geq3$, $A_1/A_2\geq4$, or $A_1/A_2\geq5$.

In some embodiments, mass of the positive electrode active material region is $A_1$ mg/1540.25 mm$^2$, and $A_1$ ranges from 100 to 400. In some embodiments, the value of $A_1$ is 100, 120, 140, 150, 160, 180, 200, 220, 240, 250, 280, 300, 330, 350, 380, 400, or in a range defined by any two of these values.

In some embodiments, mass of the insulation region is $A_2$ mg/1540.25 mm$^2$, and $A_2$ ranges from 60 to 250. In

some embodiments, the value of $A_2$ is 60, 70, 80, 100, 120, 140, 150, 160, 180, 200, 220, 230, 240, 250, or in a range defined by any two of these values.

In some embodiments, based on mass of the insulation region, a mass percentage of the inorganic filler in the insulation region is $M_1$%, and mass of the insulation region is $A_2$ g/1540.25 $mm^2$, where $M_1$ and $A_2$ satify $0.3 \le M_1/A_2 \le 1.5$.

In some embodiments, $0.6 \le M_1/A_2 \le 1.5$. In some embodiments, the value of $M_1/A_2$ is 0.3, 0.5, 0.6, 0.7, 0.9, 1.2, 1.4, or 1.5, or in a range defined by any two of these values.

In some embodiments, $M_1$ ranges from 80 to 95. In some embodiments, $M_1$ ranges from 85 to 95. In some embodiments, the value of $M_1$ is 80, 82, 85, 88, 90, 92, 95, or in a range defined by any two of these values.

In some embodiments, the insulation region is located on two surfaces or one surface of the positive electrode current collector. In some embodiments, the interaction region is located on two surfaces or one surface of the positive electrode current collector.

In some embodiments, the inorganic filler includes at least one of silicon dioxide, alumina, hydrated alumina, titanium oxide, magnesium oxide, magnesium hydroxide, alumina-doped silicon dioxide, or boehmite.

In some embodiments, the inorganic filler may be particle-shaped, fiber-shaped, plate-like, sheet-like., or the like. In some embodiments, the median particle size of the inorganic filler is above 0.01 μm and below 10 μm, preferably above 0.1 μm and below 5 μm, and more preferably above 0.5 μm and below 3 μm. In some embodiments, the median particle size (median particle size D50) of the inorganic filler may be measured, for example, through laser diffraction/scattering.

In some embodiments, the inorganic filler is insulating inorganic particles. In some embodiments, examples of the inorganic particles include but are not limited to inorganic oxide (such as alumina, magnesium oxide, silicon dioxide, or titanium oxide), nitride (such as aluminum nitride or silicon nitride), aluminum hydrate, metal hydroxide other than aluminum hydrate (such as potassium hydroxide or magnesium hydroxide), clay mineral (such as mica, talc, zeolite, apatite, or kaolin), and glass fiber. They can be used alone or in combinations of two or more.

In some embodiments, the insulation region may contain a binder. In some embodiments, the binder includes but is not limited to acrylic-based adhesive, styrene-butadiene rubber (SBR), or polyolefin-based adhesive, and fluoropolymer such as polyvinylidene fluoride (PVDF) or polytetrafluoroethylene (PTFE) may alternatively be used.

In some embodiments, the proportion of the binder in the insulation region is not particularly limited. For example, based on the mass of the insulation region, the proportion of the binder is above 1% and below 30%, preferably above 3% and below 25%. In some embodiments, the proportion of the binder is 1%, 5%, 10%, 15%, 20%, 25%, 30%, or in a range defined by any two of these values.

In some embodiments, the interaction region contains at least the positive electrode active material in the positive electrode active material region and the inorganic filler in the insulation region.

In some embodiments, the interaction region is a layer formed by mixing the above component of the positive electrode active material region and the above component of the insulation region. Therefore, the interaction region may contain the components of the positive electrode active material region and/or the insulation region in addition to the positive electrode active material and inorganic filler. For example, the interaction region further contains the binder in the positive electrode active material region and/or insulation region.

In some embodiments, in a case that the positive electrode active material region contains the positive electrode active material, conductive material, and binder and that the insulation region contains the inorganic filler and binder, the interaction region contains the positive electrode active material, conductive material, binder in the positive electrode active material region, inorganic filler, and binder in the insulation region.

In some embodiments, the interaction region contains alumina hydrate. In an embodiment in which the interaction region contains alumina hydrate, in addition to the positive electrode active material and inorganic filler, the interaction region further contains alumina hydrate. In another embodiment in which the interaction region contains alumina hydrate, the interaction region contains the positive electrode active material and inorganic filler, the inorganic filler being alumina hydrate.

In some embodiments, the alumina hydrate contains a hydroxyl group. In some embodiments, the alumina hydrate includes but is not limited to hydroxylated alumina (AlOOH) as crystalline alumina monohydrate, aluminum hydroxide ($Al(OH)_3$) as crystalline alumina trihydrate, or amorphous alumina gel as non-crystalline alumina hydrate. In some embodiments, the crystalline alumina hydrate (that is, crystalline alumina monohydrate and crystalline alumina trihydrate) may be either of the α-type or β-type, preferably, α-type. In some embodiments, the alumina hydrate is preferably hydroxylated alumina, such as boehmite, which can further improve the safety performance.

In some embodiments, there is no particular limitation on the median particle size (median particle size D50) of the alumina hydrate. When the median particle size of the alumina hydrate is too small, it is likely to generate acid (especially HF) in the electrolyte, which may lead to deterioration of the positive electrode active material. Therefore, the median particle size of the alumina hydrate is preferably above 0.5 μm. On the other hand, when the median particle size of the alumina hydrate is too large, it becomes difficult to generate acid (especially HF) in the electrolyte, affecting the intermittent cycling performance. Therefore, the median particle size of the alumina hydrate is preferably below 3

μm. The average particle size (median particle size D50) of the alumina hydrate may be measured, for example, through laser diffraction/scattering.

In some embodiments, the interaction region may be formed in the following method: simultaneously or sequentially applying a paste forming the positive electrode active material region and a paste forming the insulation region onto the positive electrode current collector in a way that one adjoins the other, and then drying these pastes simultaneously. In this case, before drying, the paste forming the positive electrode active material region and the paste forming the insulation region are mixed at the interface, forming the interaction region at the interface between the positive electrode active material region and the insulation region. Choosing the alumina hydrate as the inorganic filler in the paste forming the insulation region can make the interaction region contain alumina hydrate. Alternatively, a paste forming the positive electrode active material region, a paste forming the insulation region, and a paste containing the alumina hydrate for forming the interaction region may be used to form the positive electrode active material region, the insulation region, and the interaction region.

In some embodiments, the positive electrode active material region further includes polyol. In some embodiments, the polyol includes at least one of the following compounds: methylene glycol, ethylene glycol, propylene glycol, isoprene glycol, 1,3-butylene glycol, 1,4-butylene glycol, diethylene glycol, dipropylene glycol, polyethylene glycol, polypropylene glycol, glycerol, diglycerol, or polyglycerol.

In some embodiments, based on the total weight of the positive electrode active material region, the proportion of the polyol is not greater than 0.3%. In some embodiments, based on the total weight of the positive electrode active material region, the proportion of the polyol is 0.01%, 0.05%, 0.1%, 0.12%, 0.15%, 0.18%, 0.2%, 0.25%, 0.28%, 0.3%, or in a range defined by any two of these values

In some embodiments, the type of the positive electrode active material is not particularly limited, provided that metal ions (for example, lithium ions) can be electrochemically absorbed and released. In some embodiments, the positive electrode active material is a material that contains lithium and at least one transition metal. Examples of the positive electrode active material may include, but are not limited to, lithium transition metal composite oxides and lithium-containing transition metal phosphate compounds.

In some embodiments, the transition metal in the lithium transition metal composite oxide includes V, Ti, Cr, Mn, Fe, Co, Ni, or Cu. In some embodiments, the lithium transition metal composite oxide includes lithium cobalt composite oxide such as $LiCoO_2$, lithium nickel composite oxide such as $LiNiO_2$, lithium manganese composite oxide such as $LiMnO_2$, $LiMn_2O_4$, or $Li_2MnO_4$, or lithium nickel manganese cobalt composite oxide such as $LiNi_{1/3}Mn_{1/3}Co_{1/3}O_2$ or $LiNi_{0.5}Mn_{0.3}Co_{0.2}O_2$, where some of transition metal atoms constituting the main body of these lithium transition metal composite oxides are replaced by other elements such as Na, K, B, F, Al, Ti, V, Cr, Mn, Fe, Co, Li, Ni, Cu, Zn, Mg, Ga, Zr, Si, Nb, Mo, Sn, or W. Examples of the lithium transition metal composite oxide include but are not limited to $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, and $LiMn_{1.5}Ni_{0.5}O_4$. Examples of a combination of the lithium transition metal composite oxide include but are not limited to a combination of $LiCoO_2$ and $LiMn_2O_4$, where some Mn in $LiMn_2O_4$ may be replaced with a transition metal (for example, $LiNi_{0.33}Co_{0.33}Mn_{0.33}O_2$), and some Co in $LiCoO_2$ may be replaced with a transition metal.

In some embodiments, the transition metal in the lithium-containing transition metal phosphate compound includes V, Ti, Cr, Mn, Fe, Co, Ni, or Cu. In some embodiments, the lithium-containing transition metal phosphate compound includes lithium iron phosphate such as $LiFePO_4$, $Li_3Fe_2(PO_4)_3$, or $LiFeP_2O_7$, or lithium cobalt phosphate such as $LiCoPO_4$, where some of the transition metal atoms constituting the main body of these lithium transition metal phosphate compounds are replaced with Al, Ti, V, Cr, Mn, Fe, Co, Li, Ni, Cu, Zn, Mg, Ga, Zr, Nb, Si, or other elements.

In some embodiments, the positive electrode active material contains lithium phosphate, which can improve the continuous charging performance of the electrochemical device. The use of lithium phosphate is not limited. In some embodiments, the positive electrode active material and the lithium phosphate are used in a mixed manner. In some embodiments, as compared with the weight of the positive electrode active material and lithium phosphate, the percentage of the lithium phosphate is greater than 0.1%, greater than 0.3%, or greater than 0.5%. In some embodiments, as compared with the weight of the positive electrode active material and lithium phosphate, the percentage of the lithium phosphate is less than 10%, less than 8%, or less than 5%. In some embodiments, the proportion of the lithium phosphate falls within a range defined by any two of the foregoing values.

In some embodiments, a material with a composition different from that of the positive electrode active material may be attached to a surface of the positive electrode active material. Examples of the attached material may include but are not limited to: oxides such as alumina, silicon dioxide, titanium dioxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; carbon; and the like.

In some embodiments, the material attached on the surface may be attached to the surface of the positive electrode active material in the following methods: a method for dissolving or suspending the surface-attached material in a solvent to infiltrate into the positive electrode active material, and then performing drying; a method for dissolving

or suspending the precursor of the surface-attached material in a solvent to infiltrate into the positive electrode active material, and then performing heating or the like to implement reaction of the attached material; a method for adding the attached material to a precursor of the positive electrode active material while performing sintering; and the like. In a case of attaching carbon, a method of mechanical attachment by using a carbon material (for example, activated carbon) may be used.

In some embodiments, based on the weight of the positive electrode active material region, the proportion of the surface-adhering material is greater than 0.1 ppm, greater than 1 ppm, or greater than 10 ppm. In some embodiments, based on the weight of the positive electrode active material region, the proportion of the surface-adhering material is less than 10%, less than 5%, or less than 2%. In some embodiments, based on the weight of the positive electrode active material region, the proportion of the surface-adhering material falls within a range defined by any two of the foregoing values.

Attaching the material to the surface of the positive electrode active material can inhibit oxidation reaction of an electrolyte on the surface of the positive electrode active material, which can help increase a service life of the electrochemical device. When the amount of the surface-adhering material is too small, the effect thereof cannot be fully exhibited; when the amount of the surface-adhering material is too large, the entry and exit of lithium ions may be hindered, and thus, the resistance may increase sometimes.

In this application, a positive electrode active material with a material adhered to the surface of the positive electrode active material and being different from the composition thereof is also referred to as a "positive electrode active material. "

In some embodiments, the shape of the positive electrode active material includes but is not limited to blocky, polyhedral, spherical, ellipsoidal, platy, needle-like, and columnar. In some embodiments, the positive electrode active material particles include primary particles, secondary particles, or a combination thereof. In some embodiments, primary particles may be aggregated into secondary particles.

In some embodiments, the tap density of the positive electrode active material is greater than 0.5 g/cm$^3$, greater than 0.8 g/cm$^3$, or greater than 1.0 g/cm$^3$. When the tap density of the positive electrode active material is within the above range, the amounts of the dispersion medium, conductive material, and positive electrode binder required for forming the positive electrode active material region can be reduced, ensuring the filling rate of the positive electrode active material and the capacity of the electrochemical device. With composite oxide powder with high tap density used, a high-density positive electrode active material region can be formed. Generally, a larger tap density is more preferable, with no particular upper limit. In some embodiments, the tap density of the positive electrode active material is less than 4.0 g/cm$^3$, less than 3.7 g/cm$^3$, or less than 3.5 g/cm$^3$. When the tap density of the positive electrode active material has an upper limit as described above, a reduction in charge characteristics can be suppressed.

The tap density of the positive electrode active material can be calculated by placing 5 g to 10 g of positive electrode active material powder in a 10 mL glass measuring cylinder, and subjecting it to 200 strokes of 20 mm vibration, to obtain the powder filling density (tap density).

When the positive electrode active material particles are primary particles, the median particle size (D50) of the positive electrode active material particles refers to a primary particle size of the positive electrode active material particles. When the primary particles of the positive electrode active material particles are aggregated into secondary particles, the median particle size (D50) of the positive electrode active material particles refers to a secondary particle size of the positive electrode active material particles.

In some embodiments, the median particle size (D50) of the positive electrode active material particles is greater than 0.3 μm, greater than 0.5 μm, greater than 0.8 μm, or greater than 1.0 μm. In some embodiments, the median particle size (D50) of the positive electrode active material particles is less than 30 μm, less than 27 μm, less than 25 μm, or less than 22 μm. In some embodiments, the median particle size (D50) of the positive electrode active material particles falls within a range defined by any two of the foregoing values. When the median particle size (D50) of the positive electrode active material particles is within the above range, a positive electrode active material with high tap density can be obtained, suppressing the reduction in the performance of the electrochemical device. On the other hand, during the preparation of the positive electrode in the electrochemical device (that is, when the positive electrode active material, conductive material, and binder are made into a slurry and applied as a thin film), problems such as stripes can be prevented. Here, when two or more positive electrode active materials with different median particle sizes are mixed, the filling properties during positive electrode preparation can be further improved.

The median particle size (D50) of the positive electrode active material particles can be determined using a laser diffraction/scattering particle size distribution measuring device: in a case that an LA-920 particle size distribution meter manufactured by HORIBA is used, using a 0.1% sodium hexametaphosphate aqueous solution as the dispersing medium in measurement, and setting the refractive index for measurement to 1.24 after 5 minutes of ultrasonic dispersion.

## II. Electrolyte

The electrolyte used in the electrochemical device of this application includes an electrolytic salt and a solvent for dissolving the electrolytic salt. In some embodiments, the electrolyte used in the electrochemical device of this application further includes an additive.

In some embodiments, the electrolyte includes at least one of cyano-containing compound or sulfur-oxygen double bond containing compound.

In some embodiments, the cyano-containing compound includes at least one of succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-heptanedionitrile, 1,4-bis(cyanoethoxy) butane, diethylene glycol di(2-cyanoethyl) ether, triethylene glycol di(2-cyanoethyl) ether, tetraethylene glycol di(2-cyanoethyl) ether, 1,3-di(2-cyanoethoxy)propane, 1,4-di(2-cyanoethoxy) butane, 1,5-di(2-cyanoethoxy) pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3 -diethyl-2-butene, 1,6-dicyano-3-hexene, 1,6-dicyano-2-methyl-3-hexene, 1,3,5-pentanetricarbonitrile, 1,2,3-propanetricarbonitrile , 1,3,6-hexanetricarbonitrile, 1,2,6-hexanetricarbonitrile, 1,2,3-tris(2-cyanoethoxy)propane, 1,2,4-tris(2-cyano) ethoxy)butane, 1,1,1-tris(cyanoethoxymethylene)ethane, 1,1,1 -tris(cyanoethoxymethylene)propane, 3-methane 1,3,5-tris(cyanoethoxy)pentane, 1,2,7-tris(cyanoethoxy)heptane, 1,2,6-tris(cyanoethoxy) hexane, or 1,2,5-tris(cyanoethoxy)pentane.

The above cyano-containing compounds can be used separately or in any combination. If the electrolyte contains two or more cyano-containing compounds, the proportion of the cyano-containing compound refers to the total proportion of the two or more cyano-containing compounds.

In some embodiments, based on mass of the electrolyte, a mass percentage of the cyano-containing compound is a%, and a ranges from 0.1 to 15. In some embodiments, the value of a is 0.1, 0.4, 0.8, 1, 1.6, 2.0, 3, 4, 5, 6, 7, 8, 9, 10, 11, 12, 13, 14, 15, or in a range defined by any two of these values.

In some embodiments, the cyano-containing compound includes at least two dinitrile compounds. In some embodiments, the cyano-containing compound includes at least a dinitrile compound and a trinitrile compound. In some embodiments, the cyano-containing compound includes at least an ether bond containing dinitrile compound and an ether bond containing trinitrile compound.

In some embodiments, $A_1$ and a satisfy $A_1/a>8$. In some embodiments, $A_1$ and a satisfy $A_1/a\geq10$. In some embodiments, $A_1$ and a satisfy $A_1/a\geq15$. In some embodiments, $A_1$ and a satisfy $A_1/a\geq20$. In some embodiments, $A_1$ and a satisfy $A_1/a\geq30$. In some embodiments, $A_1$ and a satisfy $A_1/a\geq40$. In some embodiments, the value of $A_1/a$ is 8, 10, 12, 15, 18, 20, 22, 25, 28, 30, 32, 35, 38, 40, 42, or 45, or in a range defined by any two of these values.

In some embodiments, the sulfur-oxygen double bond containing compound includes at least one of the following compounds: bicyclic sulfate, bicyclic sultone, vinyl sulfate, propylene sulfate, 1,3-propanesultone, 1,3-propenesultone, methylene methanedisulfonate, or ethylene methanedisulfonate.

In some embodiments, the sulfur-oxygen double bond containing compound includes a compound of formula 1:

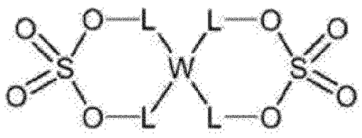 formula 1,

where

W is selected from

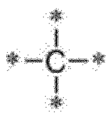, 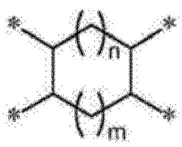, 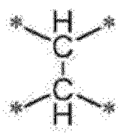,

or

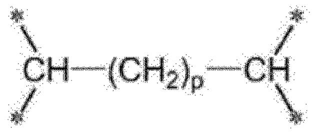 ;

each instance of L is independently selected from single bond or methylene group, and m is 1, 2, 3, or 4; and n is 0, 1, or 2, and p is 0, 1, 2, 3, 4, 5, or 6.

In some embodiments, the compound of formula 1 includes at least one of the following compounds:

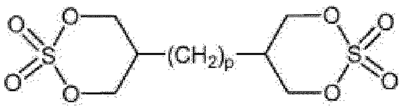 formula 1-2

or

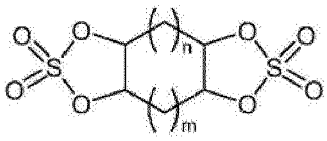 formula 1-3.

In some embodiments, the compound of formula 1 includes at least one of the following compounds:

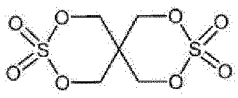 formula 1-1, 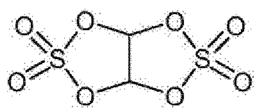 formula 1-4,

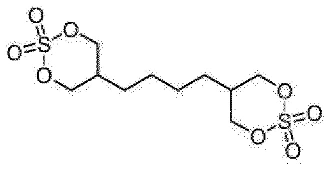 formula 1-5,

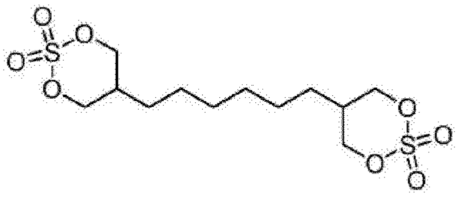 formula 1-6,

or

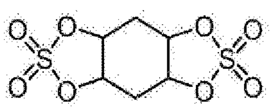 formula 1-7.

In some embodiments, the bicyclic sultone includes a compound of formula 2:

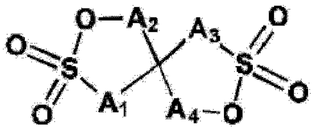 formula 2,

where $A_1$, $A_2$, $A_3$, and $A_4$ are each independently selected from substituted or unsubstituted alkylene group; where when $A_1$, $A_2$, $A_3$, and $A_4$ are each independently substituted, a substituent is selected from halogen, alkyl, or halogen-substituted alkyl.

In some embodiments, the compound of formula 2 includes at least one of the following compounds:

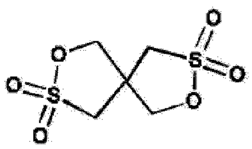 formula 2-1, 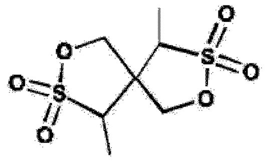 formula 2-2,

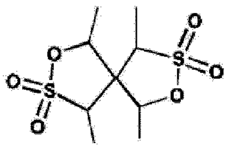 formula 2-4, 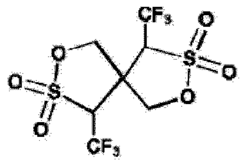 formula 2-5,

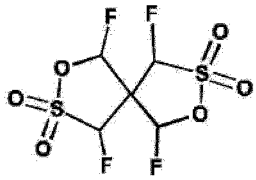 formula 2-6,

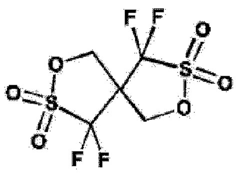 formula 2-7, 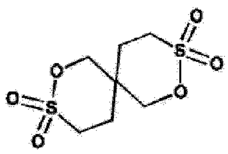 formula 2-8,

or

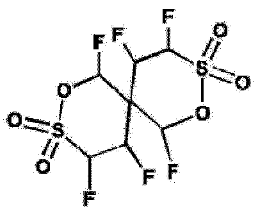 formula 2-9.

In some embodiments, based on mass of the electrolyte, a mass percentage of the sulfur-oxygen double bond containing compound is b%, and b ranges from 0.001 to 8. In some embodiments, the value of b is 0.001, 0.1, 0.5, 1, 1.5, 2, 2.5, 3, 3.5, 4, 4.5, 5, 5.5, 6, 6.5, 7, 7.5, 8, or in a range defined by any two of these values.

In some embodiments, the electrolyte includes a cyano-containing compounds and a sulfur-oxygen double bond containing compounds, and satisfies the relationships: $0.1 \leq a + b \leq 15$ and $0.5 \leq a/b \leq 20$. In some embodiments, $0.1<a+b<15$; and $2<a/b<12$. In some embodiments, the value of a+b is 0.1, 0.5, 1, 2, 3, 4, 5, 6, 7, 8, 9, 10, 11, 12, 13,

14, 15, or in a range defined by any two of these values. In some embodiments, the value of a/b is 0.5, 1, 2, 3, 4, 5, 6, 7, 8, 9, 10, 11, 12, 13, 14, 15, 16, 17, 18, 19, 20, or in a range defined by any two of these values.

In some embodiments, the electrolyte further contains any non-aqueous solvent that is known in the art and that may be used as a solvent for the electrolyte.

In some embodiments, the non-aqueous solvent includes, but is not limited to, one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, examples of the cyclic carbonate may include, but are not limited to, one or more of the following: ethylene carbonate (EC), propylene carbonate (PC), and butylene carbonate. In some embodiments, the cyclic carbonate has 3 to 6 carbon atoms.

In some embodiments, examples of the linear carbonate may include, but are not limited to, one or more of the following: dimethyl carbonate, ethyl methyl carbonate, diethyl carbonate (DEC), methyl n-propyl carbonate, ethyl n-propyl carbonate, dipropyl carbonate, and the like. Examples of the linear carbonate substituted with fluorine may include, but are not limited to, one or more of the following: bis(fluoromethyl) carbonate, bis(difluoromethyl) carbonate, bis (trifluoromethyl) carbonate, bis(2-fluoroethyl) carbonate, bis (2,2-difluoroethyl) carbonate, bis(2,2,2-trifluoroethyl) carbonate, 2-fluoroethyl methyl carbonate, 2,2-difluoroethyl methyl carbonate, 2,2,2-trifluoroethyl methyl carbonate, and the like.

In some embodiments, examples of the cyclic carboxylate may include, but are not limited to, one or more of the following: γ-butyrolactone and γ-valerolactone. In some embodiments, some hydrogen atoms in the cyclic carboxylate may be replaced with fluorine.

In some embodiments, examples of the linear carboxylates may include, but are not limited to, one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the chain carboxylate may be replaced with fluorine. In some embodiments, examples of the fluorine-substituted linear carboxylate may include, but are not limited to, methyl trifluoroacetate, ethyl trifluoroacetate, propyl trifluoroacetate, butyl trifluoroacetate, 2,2,2-trifluoroethyl trifluoroacetate, and the like.

In some embodiments, examples of the cyclic ether may include, but are not limited to, one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, examples of the linear ether may include, but are not limited to, one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxy ethane, and 1,2-ethoxymethoxyethane.

In some embodiments, examples of the phosphorus-containing organic solvent may include, but are not limited to, one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris (2,2,2-trifluoroethyl) phosphate, tris (2,2,3,3,3-pentafluoropropyl) phosphate, and the like.

In some embodiments, examples of the sulfur-containing organic solvent may include, but are not limited to, one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the organic solvent containing sulfur may be replaced with fluorine.

In some embodiments, the aromatic fluorine-containing solvent includes, but is not limited to, one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte in this application includes cyclic carbonate, chain carbonate, cyclic carboxylate, chain carboxylate, and a combination thereof. In some embodiments, the solvent used in the electrolyte in this application includes an organic solvent in a group formed by the following materials: ethylene carbonate, propylene carbonate, diethyl carbonate, ethyl propionate, propyl propionate, propyl acetate, ethyl acetate, and a combination thereof. In some embodiments, the solvent used in the electrolyte in this application includes ethylene carbonate, propylene carbonate, diethyl carbonate, ethyl propionate, propyl propionate, γ-butyrolactone, and a combination thereof.

In some embodiments, the electrolytic salt is not particularly limited. Any material commonly known as being applicable to serve as an electrolytic salt can be used. For lithium secondary batteries, lithium salts are typically used. Examples of the electrolytic salt may include but are not limited to inorganic lithium salts such as $LiPF_6$, $LiBF_4$, $LiClO_4$, $LiAlF_4$, $LiSbF_6$, and $LiWF_7$; lithium tungstates such as $LiWOF_5$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$,

and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which helps improve characteristics of the electrochemical device such as output power, high-rate charge/discharge, high-temperature storage, and cycling characteristics.

The concentration of the electrolytic salt is not particularly limited, provided that the effects of this application are not impaired. In some embodiments, the total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolyte falls within a range defined by any two of the foregoing values. When the concentration of the electrolytic salt falls within the foregoing range, the amount of lithium as charged particles would not be excessively small, and the viscosity can be controlled within an appropriate range, so as to ensure good conductivity.

When two or more electrolytic salts are used, the electrolytic salts include at least one salt selected from the group consisting of monofluorophosphate, borate, oxalate, and fluorosulfonate. In some embodiments, the electrolytic salt includes a salt selected from the group consisting of monofluorophosphate, oxalate, and fluorosulfonate. In some embodiments, the electrolytic salt includes a lithium salt. In some embodiments, based on the weight of the electrolytic salt, a proportion of the salt selected from the group consisting of monofluorophosphate, borate, oxalate, and fluorosulfonate is greater than 0.01% or greater than 0.1%. In some embodiments, based on the weight of the electrolytic salt, a proportion of the salt selected from the group consisting of monofluorophosphate, borate, oxalate, and fluorosulfonate is less than 20% or less than 10%. In some embodiments, the proportion of the salt selected from the group consisting of monofluorophosphate, borate, oxalate, and fluorosulfonate falls within a range defined by any two of the foregoing values.

In some embodiments, the electrolytic salt includes more than one material selected from the group consisting of monofluorophosphate, borate, oxalate, and fluorosulfonate, and more than one other salt different from the more than one material. Examples of the other salt different from the salts in the group include lithium salts exemplified above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$ and $LiPF_3(C_2F_5)_3$. In some embodiments, the other salt is $LiPF_6$.

In some embodiments, based on the weight of the electrolytic salt, a proportion of the other salt is greater than 0.01% or greater than 0.1%. In some embodiments, based on the weight of the electrolytic salt, a proportion of the other salt is less than 20%, less than 15%, or less than 10%. In some embodiments, the proportion of the other salt falls within a range defined by any two of the foregoing values. The other salt having the foregoing proportion helps balance the conductivity and viscosity of the electrolyte.

### III. Negative electrode

The negative electrode includes a negative electrode current collector and a negative electrode active material region disposed on one or two surfaces of the negative electrode current collector, and the negative electrode active material region includes a negative electrode active material. There may be one or a plurality of negative electrode active material region layers, and each of the plurality of negative electrode active material region layers may contain the same or different negative electrode active materials. The negative electrode active material is any material capable of reversibly intercalating and deintercalating metal ions such as lithium ions. In some embodiments, a rechargeable capacity of the negative electrode active material is greater than a discharge capacity of the positive electrode active material to prevent lithium metal from unexpectedly precipitating onto the negative electrode during charging.

As a current collector for holding the negative electrode active material, the negative electrode current collector may use any well-known current collector. Examples of the negative electrode current collector include, but are not

limited to, metal materials such as aluminum, copper, nickel, stainless steel, and nickel plated steel. In some embodiments, the negative electrode current collector is copper.

In a case that the negative electrode current collector is a metal material, the negative electrode current collector may take forms including but not limited to a metal foil, a metal cylinder, a metal coil, a metal plate, a metal foil, a sheet metal mesh, a punched metal, a foamed metal, and the like. In some embodiments, the negative electrode current collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, a thickness of the negative electrode current collector is greater than 1 μm or greater than 5 μm. In some embodiments, the thickness of the negative electrode current collector is less than 100 μm or less than 50 μm. In some embodiments, the thickness of the negative electrode current collector falls within a range defined by any two of the foregoing values.

The negative electrode active material is not particularly limited, provided that it can reversibly absorb and release lithium ions. Examples of the negative electrode active material may include, but are not limited to, carbon materials such as natural graphite and artificial graphite; metals such as silicon (Si) and tin (Sn); oxides of metal elements such as Si and Sn; or the like. The negative electrode active material may be used alone or in combination.

The negative electrode active material region may further include a negative electrode binder. The negative electrode binder can improve binding between particles of the negative electrode active material and binding between the negative electrode active material and the current collector. The type of the negative electrode binder is not particularly limited, provided that its material is stable to the electrolyte or a solvent used in manufacturing of the electrode. In some embodiments, the negative electrode binder includes a resin binder. Examples of the resin binder include, but are not limited to, fluororesins, polyacrylonitrile (PAN), polyimide resins, acrylic resins, polyolefin resins, and the like. When an aqueous solvent is used to prepare a negative electrode mixture slurry, the negative electrode binder includes, but is not limited to, carboxymethyl cellulose (CMC) or its salt, styrene-butadiene rubber (SBR), polyacrylic acid (PAA) or its salt, polyvinyl alcohol, and the like.

The negative electrode may be prepared by using the following method: applying a negative electrode mixture slurry containing the negative electrode active material, the resin binder, and the like on the negative electrode current collector, and after drying, and performing rolling to form a negative electrode active material region on both sides of the negative electrode current collector, thereby obtaining the negative electrode.

## IV. Separator

In order to prevent short circuit, a separator is typically provided between the positive electrode and the negative electrode. In this case, the electrolyte of this application typically permeates the separator.

The material and shape of the separator are not particularly limited, provided that the separator does not significantly impair the effects of this application. The separator may be a resin, glass fiber, inorganic material, or the like that is formed of a material stable to the electrolyte of this application. In some embodiments, the separator includes a porous sheet or nonwoven fabric-like material having an excellent fluid retention property, or the like. Examples of the material of the resin or glass fiber separator may include, but are not limited to, polyolefin, aromatic polyamide, polytetrafluoroethylene, polyethersulfone, and the like. In some embodiments, the polyolefin is polyethylene or polypropylene. In some embodiments, the polyolefin is polypropylene. The material of the separator may be used alone or in any combination.

The separator may alternatively be a material formed by laminating the foregoing materials, and examples thereof include, but are not limited to, a three-layer separator formed by laminating polypropylene, polyethylene, and polypropylene in order.

Examples of the material of the inorganic material may include, but are not limited to, oxides such as alumina and silicon dioxide, nitrides such as aluminum nitride and silicon nitride, and sulfates (for example, barium sulfate and calcium sulfate). The form of the inorganic material may include, but is not limited to, a granular or fibrous form.

The form of the separator may be a thin-film form, and examples thereof include, but are not limited to, a non-woven fabric, a woven fabric, a microporous film, and the like. In the thin-film form, the separator has a pore diameter of 0.01 μm to 1 μm and a thickness of 5 μm to 50 μm. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 μm.

The thickness of the separator is random. In some embodiments, the thickness of the separator is greater than 1 μm, greater than 5 μm, or greater than 8 μm. In some embodiments, the thickness of the separator is less than 50 μm, less than 40 μm, or less than 30 μm. In some embodiments, the thickness of the separator falls within a range

defined by any two of the foregoing values. When the thickness of the separator falls within the foregoing range, its insulation performance and mechanical strength can be ensured, helping the rate performance and energy density of the electrochemical device.

When a porous material such as a porous sheet or a nonwoven fabric is used as the separator, the porosity of the separator is random. In some embodiments, the porosity of the separator is greater than 10%, greater than 15%, or greater than 20%. In some embodiments, the porosity of the separator is less than 60%, less than 50%, or less than 45%. In some embodiments, the porosity of the separator falls within a range defined by any two of the foregoing values. When the porosity of the separator falls within the foregoing range, its insulation performance the mechanical strength can be ensured and film resistance can be suppressed, so that the electrochemical device has good safety performance.

The average pore diameter of the separator is also random. In some embodiments, the average pore diameter of the separator is less than 0.5 $\mu$m or less than 0.2 $\mu$m. In some embodiments, the average pore diameter of the separator is greater than 0.05 $\mu$m. In some embodiments, the average pore diameter of the separator falls within a range defined by any two of the foregoing values. If the average pore diameter of the separator exceeds the foregoing range, a short circuit is likely to occur. When the average pore diameter of the separator falls within the foregoing range, the electrochemical device has good safety performance.

**V. Components of the electrochemical device**

The components of the electrochemical device include an electrode assembly, a collector structure, an outer packing case, and a protective unit.

<u>Electrode assembly</u>

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly falls within a range defined by any two of the foregoing values. When the occupancy of the electrode assembly falls within the foregoing range, the capacity of the electrochemical device can be ensured, degradation of repeated charge/discharge performance and high temperature storage property caused by an increasing internal pressure can be suppressed.

<u>Collector structure</u>

The collector structure is not particularly limited. In some embodiments, the collector structure is a structure that helps reduce the resistance of wiring portions and bonding portions. When the electrode assembly is the foregoing laminated structure, a structure in which metal core portions of the electrode layers are bundled and welded to terminals can be used. An increase in an electrode area causes a higher internal resistance; therefore, it is also acceptable that more than two terminals are provided in the electrode to decrease the resistance. When the electrode assembly has the foregoing winding structure, more than two lead structures are provided at each of the positive electrode and the negative electrode, and are bundled at the terminals, so as to reduce the internal resistance.

<u>Outer packing case</u>

The material of the outer packing case is not particularly limited, provided that the material is a material stable to the electrolyte in use. The outer packing case may use, but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes, but is not limited to, a sealed packaging structure formed by depositing metal through laser welding, resistance welding, or ultrasonic welding; or a riveting structure formed by using the foregoing metal or the like with a resin pad disposed therebetween. The outer packing case using the laminated film includes, but is not limited to, a sealed packaging structure or the like formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape.

For example, it may have any one of a cylindrical shape, a square shape, a laminated form, a button form, a large form, or the like.

Protective unit

The protective unit may use a positive temperature coefficient (PTC), a temperature fuse, or a thermistor whose resistance increases during abnormal heat release or excessive current flows, a valve (current cutoff valve) for cutting off a current flowing in a circuit by sharply increasing an internal pressure or an internal temperature of a battery during abnormal heat release, or the like. The protective unit may be selected from elements that do not operate in conventional high-current use scenarios, or such design may be used that abnormal heat release or thermal runaway does not occur even without a protective unit.

## VI. Application

The electrochemical device according to this application includes any device in which an electrochemical reaction takes place. Specific examples of the device include all types of primary batteries, secondary batteries, fuel batteries, solar batteries, or capacitors. Especially, the electrochemical device is a lithium secondary battery, including a lithium metal secondary battery or a lithium-ion secondary battery.

This application also provides an electronic device, including the electrochemical device according to this application.

The electrochemical device according to this application is not particularly limited to any purpose, and may be used for any known electronic device in the prior art. In some embodiments, the electrochemical device of this application may be used without limitation in notebook computers, pen-input computers, mobile computers, electronic book players, portable telephones, portable fax machines, portable copiers, portable printers, stereo headsets, video recorders, liquid crystal display televisions, portable cleaners, portable CD players, mini-disc players, transceivers, electronic notebooks, calculators, storage cards, portable recorders, radios, backup power sources, motors, automobiles, motorcycles, motor bicycles, bicycles, lighting appliances, toys, game machines, clocks, electric tools, flash lamps, cameras, large household batteries, lithium-ion capacitors, and the like.

The following uses a lithium-ion battery as an example and describes preparation of a lithium-ion battery with reference to specific examples. Persons skilled in the art understands that the preparation method described in this application is only an example, and that all other suitable preparation methods fall within the scope of this application.

## Examples

### I. Preparation of lithium-ion battery

1. Preparation of negative electrode

Artificial graphite, styrene-butadiene rubber, and sodium carboxymethylcellulose were mixed based on a mass ratio of 96%:2%:2% in deionized water. The mixture was stirred evenly to obtain a slurry. The slurry was applied onto a copper foil of 9 μm. After steps of drying, cold pressing, cutting, and tab welding, a negative electrode was obtained.

2. Preparation of positive electrode

Lithium cobalt oxide (LC9000E by Hunan Shanshan), Super-P and polyvinylidene fluoride were mixed with N-methylpyrrolidone at a mass ratio of 95%:2%:3% and the mixture was stirred to uniformality to obtain a positive electrode active material region slurry. An inorganic filler and polyvinylidene fluoride were mixed with N-methylpyrrolidone at a mass ratio of 90%:10% to obtain an insulation region slurry. The positive electrode active material region slurry and the insulation region slurry were applied onto an aluminum foil of 12 μm. After steps of drying, cold pressing, cutting, and tab welding, to obtain a positive electrode. The positive electrode surface is shown in FIG. 3. The inorganic fillers used and their particle sizes are as follows: boehmite 1.2 μm, alumina 1.5 μm, silicon dioxide 2 μm, titanium oxide 1.5 μm, magnesium oxide 2.5 μm, and magnesium hydroxide 1.5 μm.

3. Preparation of electrolyte

Under a dry argon environment, EC, PC, and DEC (based on a weight ratio of 1:1:1) were mixed, and $LiPF_6$ was added. The mixture was made even to obtain a base electrolyte, where the concentration of $LiPF_6$ was 12%. Different amounts of additives were added to the base electrolyte, to obtain different electrolytes used in different examples and

comparative examples. The proportion of each additive in the electrolyte is calculated based on the mass of the electrolyte.

The abbreviations and names of the components in the electrolyte are as shown in the table below:

| Name of material | Abbreviation | Name of material | Abbreviation |
|---|---|---|---|
| Ethylene carbonate | EC | Propylene carbonate | PC |
| Diethyl carbonate | DEC | Adiponitrile | ADN |
| Butanedinitrile | SN | Ethylene glycol bis(propionitrile) ether | EDN |
| 1,3,6-hexanetricarbonitrile | HTCN | 1,2,3-tris(2-cyanoethoxy)pro pane | TCEP |
| 1,3 -propanesultone | PS | 1,2-ethylene glycol sulfate | DTD |
| Compound of formula 1-1 | Formula 1-1 | Compound of formula 1-2 | Formula 1-2 |
| Compound of formula 2-1 | Formula 2-1 | Compound of formula 2-2 | Formula 2-2 |
| Fluoroethylene carbonate | FEC | Propyl propionate | PP |

4. Preparation of separator

An 8-μm-thick porous polyethylene polymeric film was used as a separator.

5. Preparation of lithium-ion battery

The resulting positive electrode, separator, and negative electrode were wound in order and placed in an outer packing foil, leaving a liquid injection hole. The electrolyte was injected from the liquid injection hole which was then sealed. Then, formation and grading were performed to obtain a lithium-ion battery.

**II. Test method**

1. Method for testing intermittent cycling performance of lithium ions under high temperature and high pressure

At 50°C, the lithium-ion battery was charged at a constant current of 0.5C to 4.7 V, then charged at a constant voltage to a current of 0.05C, and left standing for 20 hours, and then discharged to 3.0 V at a constant current of 0.5C. The lithium-ion battery was charged/discharged multiple times under the foregoing conditions to calculate the capacity retention rate after 400 cycles. A capacity retention rate after cycling was calculated according to the following formula:

capacity retention rate after cycling = (discharge capacity of the $400^{th}$ cycle/discharge capacity of the first cycle) × 100%

2. Method for testing overcharge deformation rate of lithium-ion battery

At 25°C, the lithium-ion battery was left standing for 30 minutes, charged to 4.7 V at a rate of 0.5C, then charged to 0.05C at a constant voltage of 4.7 V, and left standing for 60 minutes. The thickness T1 of the lithium-ion battery was measured. Then the battery was charged at a constant rate of 0.1C for 60 minutes and let standing for 30 minutes. This step was repeated five times so that the lithium-ion battery reached 150% state of charge (SOC), and the thickness T2 of the lithium-ion battery was measured.

$$\text{Overcharge deformation rate}=[(T2-T1)/T1]\times 100\%.$$

3. Method for testing short circuit deformation rate of lithium-ion battery under high temperature

At 25°C, the lithium-ion battery was left standing for 30 minutes, charged to 4.7 V at a rate of 0.5C, then charged to 0.05C at a constant voltage of 4.7 V, and left standing for 60 minutes. The thickness T3 of the lithium-ion battery was measured. Subsequently, the battery was short-circuited for 10 seconds at 100 mQ, and the thickness T4 of the lithium-ion battery was measured.

$$\text{Short circuit deformation rate} = [(T4-T3)/T3] \times 100\%.$$

**III. Test results**

A. Table 1 shows the influence of the insulation region and electrolyte on the intermittent cycling performance and safety performance of the lithium-ion battery under high temperature and high pressure. Boehmite is used as an inorganic filler in the insulation region. In Examples 1-1 to 1-26 in Table 1, the proportion of the cyano-containing compound or sulfur-oxygen double bond containing compound in the electrolytes are adjusted. In Comparative Example 1-1, there is no insulation region in the positive electrode. In Comparative Example 1-2, the positive electrode has no insulation region, and the electrolyte contains neither a cyano-containing compound nor sulfur-oxygen double bond containing compound. Example 1-2 to Example 1-26 differ from Example 1-1 only in the parameters listed in Table 1.

**Table 1**

| Example | Electrolyte additive (wt%) | Intermittent cycling capacity retention rate (%) | Overcharge deformation rate (%) | Short-circuit deformation rate (%) |
|---|---|---|---|---|
| Example 1-1 | SN(4%) | 75.7 | 15.2 | 8.9 |
| Example 1-2 | ADN(4%) | 76.3 | 15.1 | 8.7 |
| Example 1-3 | EDN(2%) | 77.2 | 14.8 | 8.5 |
| Example 1-4 | HTCN(2%) | 79.1 | 14.2 | 8.3 |
| Example 1-5 | TCEP(2%) | 80.5 | 13.4 | 8.1 |
| Example 1-6 | SN(4%)+ADN(2%) | 77.5 | 13.2 | 7.9 |
| Example 1-7 | SN(4%)+HTCN(2%) | 80.4 | 13.1 | 7.6 |
| Example 1-8 | ADN(4%)+EDN(2%) | 78.9 | 12.7 | 7.5 |
| Example 1-9 | ADN(4%)+HTCN(2%) | 81.1 | 12.6 | 7.3 |
| Example 1-10 | ADN(4%)+TCEP(2%) | 83.2 | 12.3 | 7.2 |
| Example 1-11 | SN(4%)+ADN(2%)+ HTCN(2%) | 85.3 | 11.8 | 7.3 |
| Example 1-12 | SN(4%)+ADN(2%)+ TCEP(2%) | 86.2 | 11.5 | 7.5 |
| Example 1-13 | SN(4%)+HTCN(2%)+ TCEP(2%) | 87.1 | 11.3 | 7.3 |
| Example 1-14 | PS(1%) | 72.3 | 16.8 | 9.5 |
| Example 1-15 | DTD(1%) | 73.1 | 17.1 | 9.9 |
| Example 1-16 | PS(1%)+DTD(0.5%) | 74.2 | 16.9 | 9.6 |
| Example 1-17 | Formula 1-1 (1%) | 76.5 | 15.2 | 9.1 |
| Example 1-18 | Formula 1-2 (1%) | 78.9 | 15.1 | 9.4 |
| Example 1-19 | Formula 2-1 (1%) | 77.2 | 14.8 | 8.9 |
| Example 1-20 | Formula 2-2 (1%) | 78.3 | 14.6 | 9 |
| Example 1-21 | SN(4%)+PS(1%) | 86.2 | 12.1 | 8.1 |
| Example 1-22 | ADN(4%)+formula 1-1(1%) | 87.3 | 11.8 | 7.6 |
| Example 1-23 | ADN(4%)+HTCN(2%) +formula 1-1(1%) | 88.2 | 11.6 | 7.1 |
| Example 1-24 | ADN(4%)+HTCN(2%) +formula 2-1(1%) | 89.1 | 10.7 | 6.7 |
| Example 1-25 | SN(4%)+ADN(2%)+ HTCN(2%)+formula 1-1(1%) | 89.7 | 10.3 | 6.1 |

(continued)

| Example | Electrolyte additive (wt%) | Intermittent cycling capacity retention rate (%) | Overcharge deformation rate (%) | Short-circuit deformation rate (%) |
|---|---|---|---|---|
| Example 1-26 | SN(4%)+HTCN(2%)+ TCEP(2%)+formula 2-1(1%) | 90.2 | 10.1 | 5.5 |
| Comparative Example 1-1 | ADN(4%) | 54.1 | 49.8 | 51.2 |
| Comparative Example 1-2 | - | 48.1 | 57.9 | 63.1 |
| "-" indicates the absence of the material. | | | | |

As shown in the test results of Examples 1-1 to 1-26, when the insulation region and the positive electrode active material region are disposed on the positive electrode, the insulation region contains inorganic filler, and the electrolyte contains the cyano-containing compound and/or sulfur-oxygen double bond containing compound, the intermittent cycling performance and safety performance of the lithium-ion battery under high temperature and high pressure are significantly improved. In contrast, as shown in Comparative Examples 1-1 and 1-2, when there is no insulation region on the positive electrode, or there is no insulation region and the electrolyte does not contain a cyano-containing compound and sulfur-oxygen double bond containing compound, the intermittent cycling performance and safety performance under high temperature and high pressure cannot be improved.

This may be caused by the resistance in the interaction region being higher than the resistance in the positive electrode active material region. Due to the resistance difference between the interaction region and the positive electrode active material region, during charge and discharge, charge carriers accumulate on the interaction region side without utilizing the positive electrode active material contained in the interaction region. The result is the internal polarization of the positive electrode, and as a result, the interaction region becomes the starting point for the overall degradation of the positive electrode. The cyano-containing compound or sulfur-oxygen double bond containing compound can form a film on the surface of the positive electrode active material, reducing the overall resistance difference between the surface layer of the positive electrode active material region and the interaction region, reducing polarization, and thereby improving battery performance. When a suitable combination of the cyano-containing compounds is chosen, such as choosing two different dinitrile compounds, or a dinitrile compound and a trinitrile compound, a better film-forming effect on the surface of the positive electrode active material can be achieved, leading to further improvement.

B. Table 2 shows the influence of the insulation region and electrolyte on the intermittent cycling performance and safety performance of the lithium-ion battery under high temperature and high pressure. In Example 1-1, the inorganic filler is boehmite, and the electrolyte includes 4% SN. In Examples 2-1 to 2-19, the components of the inorganic fillers and the compositions of the electrolytes are adjusted.

Table 2

| Example | Inorganic filler | Electrolyte additive (wt%) | Intermittent cycling capacity retention rate (%) | Overcharge deformation rate (%) | Short-circuit deformation rate (%) |
|---|---|---|---|---|---|
| Example 1-1 | Boehmite | SN(4) | 75.7 | 15.2 | 8.9 |
| Example 2-1 | Alumina | SN(4) | 73.1 | 15.3 | 9.2 |
| Example 2-2 | Silicon dioxide | SN(4) | 75.9 | 14.9 | 8.6 |
| Example 2-3 | Titanium oxide | SN(4) | 76.8 | 14.2 | 8.1 |
| Example 2-4 | Magnesium oxide | SN(4) | 77.1 | 14.1 | 7.9 |
| Example 2-5 | Magnesium hydroxide | SN(4) | 78.2 | 13.7 | 7.3 |
| Example 2-6 | Boehmite and silicon dioxide (mass ratio 1:1) | SN(4) | 78.3 | 13.2 | 7.1 |
| Example 2-7 | Alumina and silicon dioxide (mass ratio 1:1) | SN(4) | 78.5 | 12.6 | 6.8 |
| Example 2-8 | Boehmite and alumina (mass ratio 1:1) | SN(4) | 79.2 | 12.4 | 6.5 |
| Example 2-9 | Boehmite and magnesium hydroxide (mass ratio 1:1) | SN(4) | 80.3 | 12.1 | 6.3 |
| Example 2-10 | Alumina | HTCN(1) | 73.9 | 15.1 | 8.6 |

(continued)

| Example | Inorganic filler | Electrolyte additive (wt%) | Intermittent cycling capacity retention rate (%) | Overcharge deformation rate (%) | Short-circuit deformation rate (%) |
|---|---|---|---|---|---|
| Example 2-11 | Silicon dioxide | HTCN(1) | 76.2 | 14.2 | 8.5 |
| Example 2-12 | Titanium oxide | HTCN(1) | 76.9 | 13.3 | 7.9 |
| Example 2-13 | Magnesium oxide | HTCN(1) | 77.7 | 13.1 | 7.4 |
| Example 2-14 | Magnesium hydroxide | HTCN(1) | 78.9 | 12.5 | 7.1 |
| Example 2-15 | Alumina | TCEP(1) | 74.3 | 14.5 | 8.2 |
| Example 2-16 | Silicon dioxide | TCEP(1) | 76.7 | 13.9 | 7.9 |
| Example 2-17 | Titanium oxide | TCEP(1) | 77.3 | 12.7 | 7.3 |
| Example 2-18 | Magnesium oxide | TCEP(1) | 77.9 | 12.4 | 7.1 |
| Example 2-19 | Magnesium hydroxide | TCEP(1) | 81.1 | 10.8 | 5.9 |
| "-" indicates the absence of the material. | | | | | |

As shown in Examples 2-1 to 2-19, excellent intermittent cycling performance and safety performance under high temperature and high pressure are achieved by changing the components of the inorganic fillers. Specifically, when the inorganic fillers such as boehmite and magnesium hydroxide with weak alkalinity are chosen, the influence on the resistance of the interaction region is minimized, leading to further improvement.

C. Table 3 illustrates the influence of the relationship between the proportion of the cyano-containing compound (a%) and sulfur-oxygen double bond containing compound (b%) on the intermittent cycling performance and safety performance of the lithium-ion battery under high temperature and high pressure. In Example 1-1, the inorganic filler is boehmite, and the electrolyte includes 4% SN. In Examples 3-1 to 3-14, the inorganic filler is boehmite, and the proportions of the cyano-containing compound and sulfur-oxygen double bond containing compound are adjusted.

Table 3

| Example | Cyano-containing compound (a%) | Sulfur-oxygen double bond containing compound (b%) | a+b | a/b | Intermittent cycling capacity retention rate (%) | Overcharge deformation rate (%) | Short-circuit deformation rate (%) |
|---|---|---|---|---|---|---|---|
| Example 1-1 | SN(4%) | - | - | - | 75.7 | 15.2 | 8.9 |
| Example 3-1 | AND(3%) | PS(1%) | 4 | 3 | 81.2 | 14.3 | 8.1 |
| Example 3-2 | AND(4%) | PS(4%) | 8 | 1 | 81.5 | 14.1 | 7.8 |
| Example 3-3 | AND(5%) +SN(6%) | PS(1%) | 12 | 11 | 82.9 | 13.8 | 7.6 |
| Example 3-4 | AND(0.5%) | PS(1%) | 1.5 | 0.5 | 78.3 | 14.5 | 7.4 |

(continued)

| Example | Cyano-containing compound (a%) | Sulfur-oxygen double bond containing compound (b%) | a+b | a/b | Intermittent cycling capacity retention rate (%) | Overcharge deformation rate (%) | Short-circuit deformation rate (%) |
|---|---|---|---|---|---|---|---|
| Example 3-5 | AND(4%) +SN(6%) | PS(0.5%) | 10.5 | 20 | 83.6 | 14.2 | 7.2 |
| Example 3-6 | HTCN(1%) | PS(2%) | 3 | 0.5 | 86.9 | 12.1 | 6.5 |
| Example 3-7 | AND(4%) +EDN(1%) +HTCN(1%) | PS(1%) | 7 | 6 | 87.5 | 11.8 | 6.4 |
| Example 3-8 | AND(4%) +SN(3%) +HTCN(1%) | PS(0.5%) | 8.5 | 16 | 87.6 | 11.4 | 6.3 |
| Example 3-9 | AND(4%) +SN(3%) +HTCN(1%) | DTD(0.5%) | 8.5 | 16 | 87.3 | 11.3 | 5.9 |
| Example 3-10 | AND(4%) +TCEP(1%) | DTD(0.5%) | 5.5 | 10 | 88.1 | 10.4 | 5.6 |
| Example 3-11 | AND(4%) +TCEP(2%) | Formula 1-1 (0.5%) | 6.5 | 12 | 88.4 | 10.2 | 5.5 |
| Example 3-12 | AND(4%) +SN(7%) +EDN (1.5%) | Formula 1-1 (0.5%) | 12.5 | 25 | 82.5 | 13.9 | 6.7 |
| Example 3-13 | AND(0.4%) | PS(1%) | 1.4 | 0.4 | 80.3 | 14.1 | 8.2 |
| Example 3-14 | AND(6%) +SN(6%) +HTCN(1%) | Formula 1-1 (0.5%) | 13.5 | 26 | 81.1 | 14.9 | 8.3 |
| Example 3-15 | AND(7%) +SN(6%) | PS(3%) | 16 | 4.3 | 79.6 | 14.6 | 8.5 |
| "-" indicates the absence of the material. | | | | | | | |

From the above test results, it can be seen that when the cyano-containing compound and the sulfur-oxygen double bond containing compound are used in combination, the stability of the formed film is better, and further improvement in intermittent cycling performance and safety performance under high temperature and high pressure can be achieved. This improvement is particularly noticeable in high-temperature short-circuit safety performance. More specifically, by controlling the proportion of the cyano-containing compound and sulfur-oxygen double bond containing compound within an appropriate range, especially satisfying the relationships: $0.1 \le a+b \le 15$ and $0.5 \le a/b \le 20$, the interface stability of the positive electrode active material region can be more fully improved, thereby further enhancing intermittent cycling performance and safety performance under high temperature and high pressure.

D. Table 4 illustrates the influence of the unit area mass ($A_1$ mg/1540.25 $mm^2$) of the positive electrode active material region and the unit area mass ($A_2$ mg/1540.25 $mm^2$) of the insulation region on the intermittent cycling performance and safety performance of the lithium-ion battery under high temperature and high pressure. Examples 4-1 to 4-11 differ from Example 1-1 only in the parameters listed in Table 4.

**Table 4**

| Example | $A_1$ | $A_2$ | $A_1/A_2$ | Intermittent cycling capacity retention rate (%) | Overcharge deformation rate (%) | Short-circuit deformation rate (%) |
|---|---|---|---|---|---|---|
| Example 1-1 | 80 | 80 | 1 | 75.7 | 15.2 | 8.9 |
| Example 4-1 | 160 | 80 | 2 | 86.3 | 12.2 | 6.5 |
| Example 4-2 | 200 | 100 | 2 | 86.5 | 12.1 | 6.3 |
| Example 4-3 | 220 | 100 | 2.2 | 87.1 | 11.8 | 6.2 |
| Example 4-4 | 240 | 100 | 2.4 | 87.4 | 11.5 | 5.9 |
| Example 4-5 | 300 | 100 | 3 | 88.2 | 11.1 | 5.8 |
| Example 4-6 | 350 | 100 | 3.5 | 88.8 | 10.6 | 5.6 |
| Example 4-7 | 350 | 150 | 2.3 | 89.1 | 10.3 | 5.5 |
| Example 4-8 | 350 | 200 | 1.75 | 79.2 | 14.7 | 7.3 |
| Example 4-9 | 400 | 200 | 2 | 89.5 | 9.1 | 5.2 |
| Example 4-10 | 450 | 300 | 1.5 | 78.5 | 14.3 | 7.8 |
| Example 4-11 | 500 | 300 | 1.7 | 78.2 | 14.9 | 7.7 |

From the above test results, it can be seen that adjusting the unit area mass of the positive electrode active material region and the unit area mass of the insulation region to satisfy $A_1/A_2>1.2$ can further improve the intermittent cycling performance and safety performance under high temperature and high pressure. This improvement is particularly noticeable in high-temperature short-circuit safety performance. Specifically, when $A_1/A_2\geq2$ is satisfied, the performance of the lithium-ion battery is further improved.

E. Table 5 illustrates the influence of the mass percentage ($M_1$%) of the inorganic filler in the insulation region and the unit area mass of the insulation region ($A_2$ mg/1540.25 $mm^2$) on the intermittent cycling performance and safety performance of the lithium-ion battery under high temperature and high pressure. Examples 5-1 to 5-9 and Example 1-1 are the same in the inorganic filler and electrolyte used except for the parameters listed in Table 5.

Table 5

| Example | $M_1$ | $A_2$ | $M_1/A_2$ | Intermittent cycling capacity retention rate (%) | Overcharge deformation rate (%) | Short-circuit deformation rate (%) |
|---|---|---|---|---|---|---|
| Example 1-1 | 80 | 80 | 1 | 75.7 | 15.2 | 8.9 |
| Example 5-1 | 90 | 60 | 1.5 | 78.3 | 12.4 | 8.7 |
| Example 5-2 | 85 | 80 | 1.1 | 79.2 | 12.1 | 8.2 |
| Example 5-3 | 90 | 100 | 0.9 | 80.3 | 11.5 | 7.6 |
| Example 5-4 | 90 | 150 | 0.6 | 81.5 | 11.1 | 7.3 |
| Example 5-5 | 92 | 200 | 0.46 | 84.6 | 10.7 | 6.3 |
| Example 5-6 | 95 | 200 | 0.48 | 87.3 | 10.2 | 6.1 |
| Example 5-7 | 75 | 250 | 0.3 | 67.1 | 25.3 | 12.3 |
| Example 5-8 | 97 | 100 | 0.97 | 63.2 | 26.6 | 12.9 |
| Example 5-9 | 97 | 60 | 1.6 | 56.2 | 28.1 | 15.2 |

It can be seen from the above test results that adjusting the unit area mass of the positive electrode active material region and the unit area mass of the insulation region to satisfy $0.3\leq M_1/A_2\leq1.5$ can further improve the intermittent cycling performance and safety performance under high temperature and high pressure. This improvement is particularly noticeable in the short-circuit safety performance under high temperature.

F. Table 6 illustrates the influence of the unit area mass ($A_1$ mg/1540.25 $mm^2$) of the positive electrode active

material region and the proportion of the cyano-containing compound (a%) on the intermittent cycling and safety performance of the lithium-ion battery under high temperature and high pressure. Examples 6-1 and 6-7 differ from Example 1-1 only in the parameters listed in Table 6.

**Table 6**

| | $A_1$ | a | $A_1$/a | Intermittent cycling capacity retention rate (%) | Overcharge deformation rate (%) | Short-circuit deformation rate (%) |
|---|---|---|---|---|---|---|
| Example 1-1 | 80 | 4 | 20 | 75.7 | 15.2 | 8.9 |
| Example 6-1 | 100 | 12 | 8.3 | 78.9 | 12.3 | 7.5 |
| Example 6-2 | 100 | 15 | 6.7 | 61.2 | 18.1 | 15.2 |
| Example 6-3 | 150 | 8 | 18.8 | 84.9 | 10.5 | 7.3 |
| Example 6-4 | 200 | 5 | 40 | 87.3 | 9.5 | 6.6 |
| Example 6-5 | 300 | 10 | 30 | 88.4 | 8.9 | 6.3 |
| Example 6-6 | 400 | 20 | 20 | 56.1 | 19.3 | 16.5 |
| Example 6-7 | 450 | 10 | 45 | 68.3 | 16.5 | 10.7 |

It can be seen from the above test results that adjusting the unit area mass of the positive electrode active material region and the proportion of the cyano-containing compound to satisfy $A_1/a>8$ can further improve the intermittent cycling performance and safety performance under high temperature and high pressure. This improvement is particularly noticeable in the short-circuit safety performance under high temperature.

F. Table 7 illustrates the influence of the additive polyol of the positive electrode on the intermittent cycling and safety performance of the lithium-ion battery under high temperature and high pressure. Examples 7-1 and 7-13 differ from Example 1-1 only in the parameters listed in Table 7. Preparation method of positive electrodes in Examples 7-1 to 7-13: Lithium cobalt oxide (LC9000E by Hunan Shanshan), Super-P and polyvinylidene fluoride were mixed with N-methylpyrrolidone at a mass ratio of 95%:2%:3%, the additive in Table 7 was added in the slurry, and the mixture was stirred to uniformity to obtain a positive electrode active material region slurry. The positive electrode active material region slurry and the insulation region slurry were both applied onto an aluminum foil of 12 μm. After steps of drying, cold pressing, cutting, and tab welding, a positive electrode was obtained.

**Table 7**

| | Polyol (wt%) | Intermittent cycling capacity retention rate (%) | Overcharge deformation rate (%) | Short-circuit deformation rate (%) |
|---|---|---|---|---|
| Example 1-1 | - | 75.7 | 15.2 | 8.9 |
| Example 7-1 | Methylene glycol (0.5%) | 78.9 | 12.5 | 6.4 |
| Example 7-2 | Ethylene glycol (0.2%) | 79.3 | 12.9 | 6.5 |
| Example 7-3 | Propylene glycol (0.3%) | 79.5 | 13.1 | 6.3 |
| Example 7-4 | Isoprene glycol (0.2%) | 80.4 | 12.3 | 6.1 |
| Example 7-5 | 1,3-butanediol (0.2%) | 81.2 | 10.5 | 6.6 |
| Example 7-6 | 1,4-butanediol (0.5%) | 81.9 | 12.7 | 6.1 |
| Example 7-7 | Diethylene glycol (0.2%) | 81.4 | 11.6 | 6.4 |
| Example 7-8 | Dipropylene glycol (0.2%) | 80.5 | 10.8 | 6.3 |
| Example 7-9 | Polyethylene glycol (0.2%) | 85.3 | 12.3 | 6.5 |
| Example 7-10 | Polypropylene glycol (0.2%) | 84.1 | 11.5 | 6.2 |
| Example 7-11 | Glycerin (0.5%) | 80.2 | 12.1 | 6.8 |
| Example 7-12 | Diglycerol (0.1%) | 81.6 | 11.7 | 6.6 |
| Example 7-13 | Polyglycerol (0.2%) | 83.2 | 12.9 | 6.5 |

"-" indicates the absence of the material.

It can be seen from the above test result that the addition of 0.1% to 0.5% polyol to the positive electrode slurry results in excellent intermittent cycling performance and safety performance under high pressure and high temperature. This improvement is likely due to the special role of the polyol in dispersing the coating slurry, significantly reducing polarization and thereby suppressing side reactions induced by heat in the battery. Surprisingly, this also leads to a noticeable improvement in the short circuit deformation rate.

References to "some embodiments", "some of embodiments", "one embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in an embodiment", "in one embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, persons skilled in the art should understand that the foregoing embodiments are not to be construed as limiting this application, and that some embodiments may be changed, replaced, and modified without departing from the spirit, principle, and scope of this application.

## Claims

1. An electrochemical device comprising a positive electrode, a negative electrode, and an electrolyte, wherein

   the positive electrode comprises a positive electrode current collector and a positive electrode active material region, an insulation region, and an interaction region, wherein the positive electrode active material region, the insulation region, and the interaction region are located on the positive electrode current collector;
   the interaction region is located between the positive electrode active material region and the insulation region and connects to the positive electrode active material region and the insulation region;
   the positive electrode active material region comprises a positive electrode active material;
   the insulation region comprises an inorganic filler;
   the interaction region comprises both the positive electrode active material and the inorganic filler; and
   the electrolyte comprises at least one of a cyano-containing compound or a sulfur-oxygen double bond containing compound.

2. The electrochemical device according to claim 1, wherein the electrolyte comprises the cyano-containing compound and the sulfur-oxygen double bond containing compound, and based on mass of the electrolyte, a mass percentage of the cyano-containing compound is a% and a mass percentage of the sulfur-oxygen double bond containing compound is b%, wherein $0.1 \le a+b \le 15$ and $0.5 \le a/b \le 20$.

3. The electrochemical device according to claim 1, wherein mass of the positive electrode active material region is $A_1$ mg/1540.25 $mm^2$, mass of the insulation region is $A_2$ mg/1540.25 $mm^2$, and $A_1$ and $A_2$ satisfy $A_1/A_2>1.2$.

4. The electrochemical device according to claim 1, wherein mass of the positive electrode active material region is $A_1$ mg/1540.25 $mm^2$, and $A_1$ ranges from 100 to 400.

5. The electrochemical device according to claim 1, wherein based on mass of the insulation region, a mass percentage of the inorganic filler in the insulation region is $M_1$%, and mass of the insulation region is $A_2$ g/1540.25 $mm^2$, wherein $M_1$ and $A_2$ satify $0.3 \le M_1/A_2 \le 1.5$.

6. The electrochemical device according to claim 1, wherein mass of the positive electrode active material region is $A_1$ mg/1540.25 $mm^2$, and based on mass of the electrolyte, a mass percentage of the cyano-containing compound is a%, where $A_1$ and a satisfy $A_1/a>8$.

7. The electrochemical device according to claim 1, wherein the inorganic filler comprises at least one of silicon dioxide, alumina, hydrated alumina, titanium oxide, magnesium oxide, magnesium hydroxide, or alumina-doped silicon dioxide, or boehmite.

8. The electrochemical device according to claim 1, wherein the cyano-containing compound comprises at least one of succinonitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-heptanedionitrile, 1,4-bis(cyanoethoxy) butane, diethylene glycol di(2-cyanoethyl) ether, triethylene glycol di(2-cyanoethyl) ether, tetraethylene glycol di(2-cyanoethyl) ether, 1,3-di(2-cyanoethoxy)propane, 1,4-di(2-cyanoethoxy) butane, 1,5-di(2-cyanoethoxy) pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3 -dimethyl-2-butene, 1,4-dicyano-2,3-diethyl-2-butene, 1,6-dicyano-3-hexene, 1,6-dicyano-2-methyl-3-hexene, 1,3,5-pentanetricarbonitrile, 1,2,3-propanetricarbonitrile , 1,3,6-hexanetricarbonitrile, 1,2,6-hexanetricarbonitrile, 1,2,3-tris(2-cyanoethoxy)propane, 1,2,4-tris(2-cyano) ethoxy)butane, 1,1,1-tris(cyanoethoxymethylene)ethane, 1,1,1 -tris(cyanoethoxymethylene)propane, 3-methane 1,3,5-tris(cyanoethoxy)pentane, 1,2,7-tris(cyanoethoxy)heptane, 1,2,6-tris(cyanoethoxy) hexane, or 1,2,5-tris(cyanoethoxy)pentane;
wherein based on mass of the electrolyte, a mass percentage of the cyano-containing compound is a%, and a ranges from 0.1 to 15.

**9.** The electrochemical device according to claim 1, wherein the cyano-containing compound comprises at least two dinitrile compounds.

**10.** The electrochemical device according to claim 1, wherein the cyano-containing compound comprises a dinitrile compound and a trinitrile compound.

**11.** The electrochemical device according to claim 1, wherein the cyano-containing compound comprises an ether bond containing dinitrile compound or an ether bond containing trinitrile compound.

**12.** The electrochemical device according to claim 1, wherein the sulfur-oxygen double bond containing compound comprises at least one of the following compounds: bicyclic sulfate, bicyclic sultone, vinyl sulfate, propylene sulfate, 1,3-propanesultone, 1,3-propenesultone, methylene methanedisulfonate, or ethylene methanedisulfonate;
wherein based on mass of the electrolyte, a mass percentage of the sulfur-oxygen double bond containing compound is b%, and b ranges from 0.001 to 8.

**13.** The electrochemical device according to claim 1, wherein the sulfur-oxygen double bond containing compound comprises a compound of formula 1:

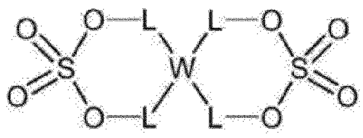

formula 1,

wherein

W is selected from

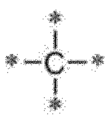
,
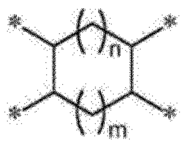
,
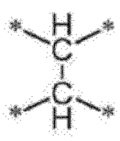
,

or

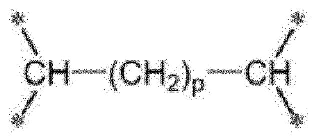
;

each instance of L is independently selected from single bond or methylene group;
m is 1, 2, 3, or 4;

n is 0, 1, or 2; and
p is 0, 1, 2, 3, 4, 5, or 6.

**14.** The electrochemical device according to claim 13, wherein the compound of formula 1 comprises at least one of the following compounds:

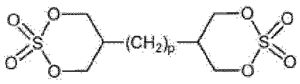 formula 1-2 or 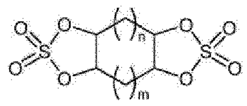 formula 1-3.

**15.** The electrochemical device according to claim 13, wherein the compound of formula 1 comprises at least one of the following compounds:

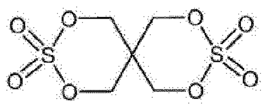 formula 1-1, 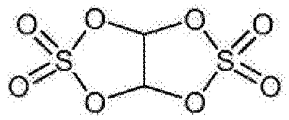 formula 1-4,

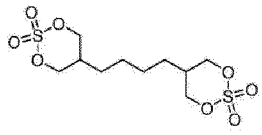 formula 1-5, 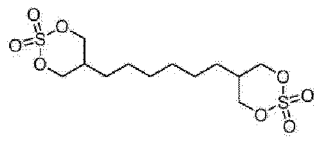 formula 1-6,

or

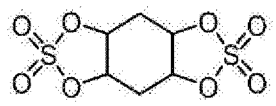 formula 1-7.

**16.** The electrochemical device according to claim 12, wherein the bicyclic sultone comprises a compound of formula 2:

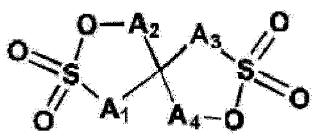 formula 2,

wherein $A_1$, $A_2$, $A_3$, and $A_4$ are each independently selected from a substituted or unsubstituted alkylene group; wherein when $A_1$, $A_2$, $A_3$, and $A_4$ are each independently substituted, a substituent is selected from halogen, alkyl, or halogen-substituted alkyl.

**17.** The electrochemical device according to claim 16, wherein the compound of formula 2 comprises at least one of the following compounds:

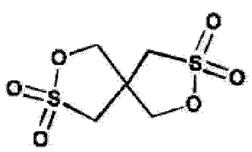 formula 2-1, 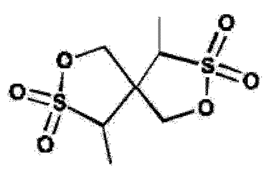 formula 2-2,

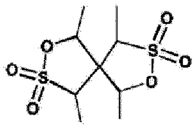 formula 2-4, 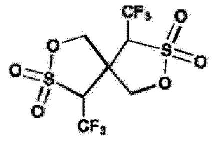 formula 2-5,

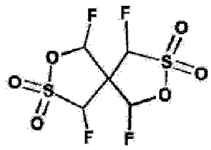 formula 2-6, 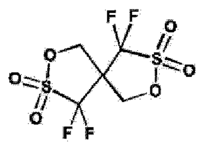 formula 2-7,

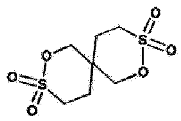 formula 2-8, or 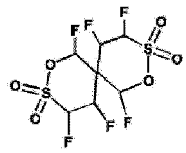 formula 2-9.

**18.** The electrochemical device according to claim 1, wherein the positive electrode active material region comprises polyol.

**19.** The electrochemical device according to claim 18, wherein the polyol comprises at least one of the following compounds: methylene glycol, ethylene glycol, propylene glycol, isoprene glycol, 1,3-butylene glycol, 1,4-butylene glycol, diethylene glycol, dipropylene glycol, polyethylene glycol, polypropylene glycol, glycerol, diglycerol, or polyglycerol.

**20.** An electronic device comprises the electrochemical device according to any one of claims 1 to 19.

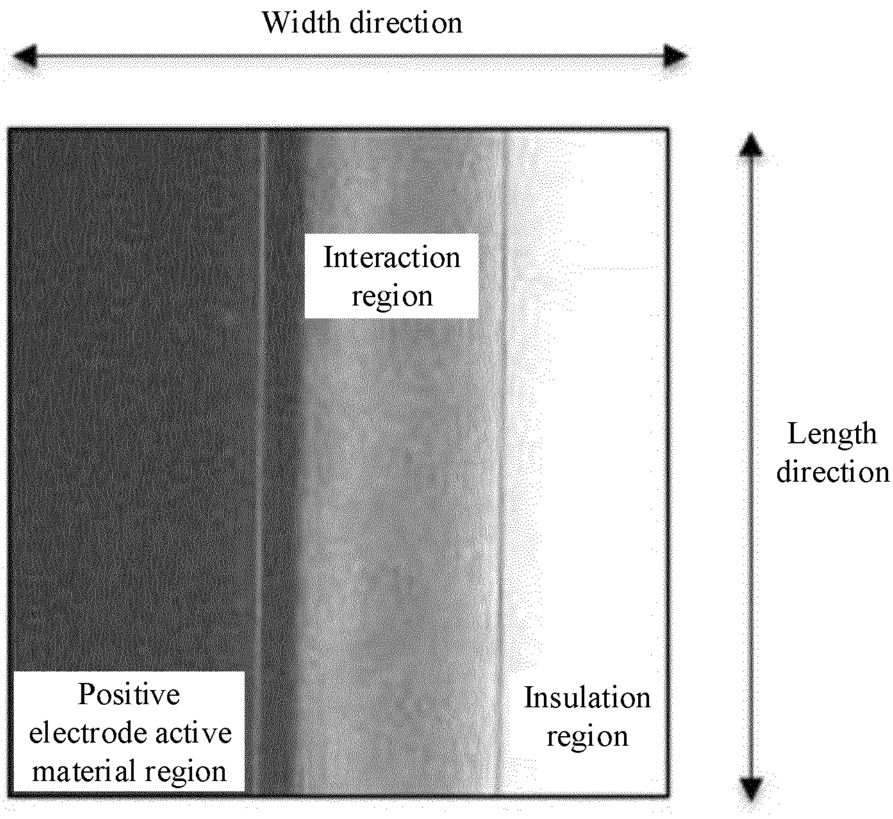
Width direction
Interaction region
Length direction
Positive electrode active material region
Insulation region

FIG. 1

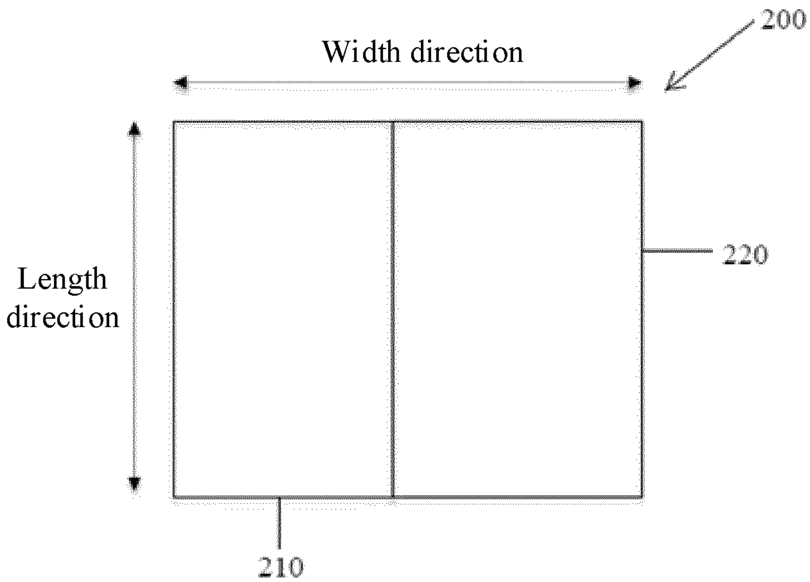
200
Width direction
220
Length direction
210

FIG. 2

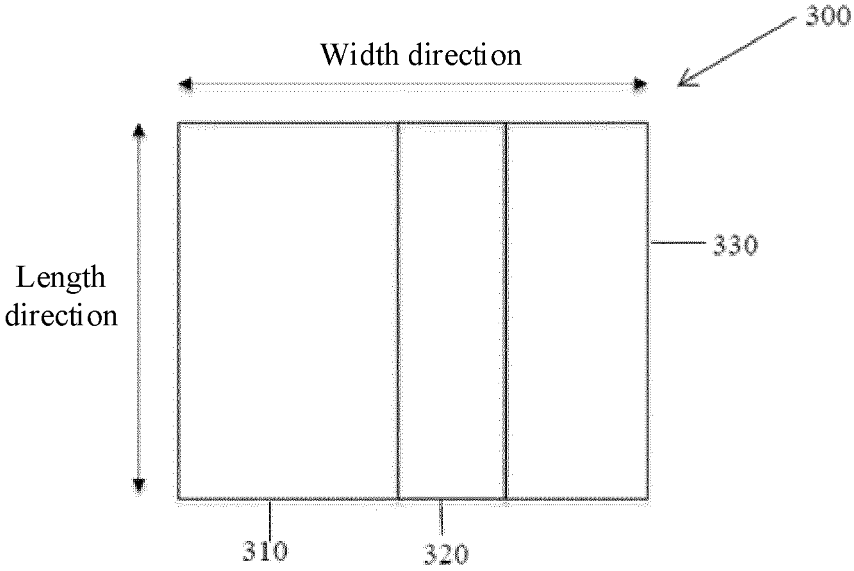
300
Width direction
Length direction
330
310
320

FIG. 3

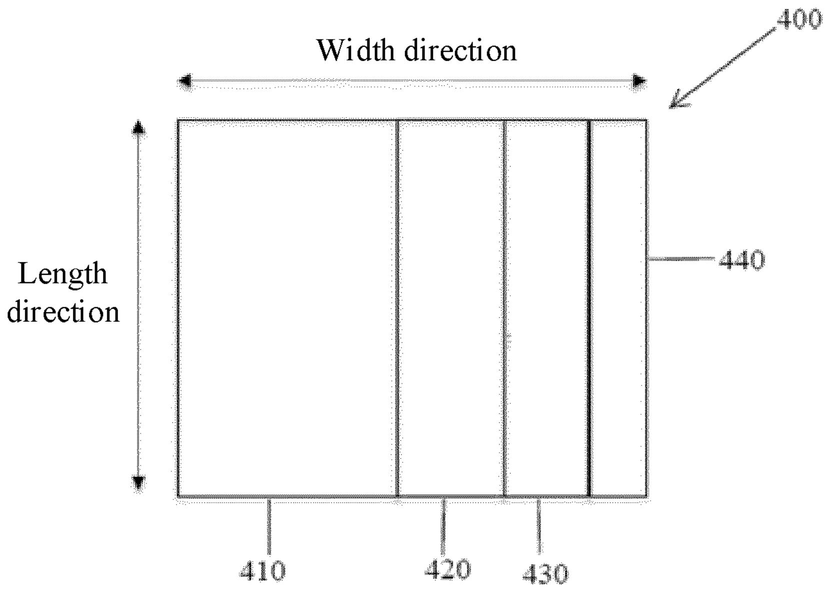
400
Width direction
Length direction
440
410
420
430

FIG. 4

**INTERNATIONAL SEARCH REPORT**

International application No. **PCT/CN2021/122316**

**A. CLASSIFICATION OF SUBJECT MATTER**

H01M 4/62(2006.01)i; H01M 4/13(2010.01)i; H01M 10/0525(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABSC; VEN; ENTXT; ENTXTC; CNKI; STN: 正极, 阴极, 绝缘层, 交互, 重叠, 交叉, 氰基, 磺酸酯, 硫酸酯, positive electrode, cathode, insulating layer, interaction, overlap, cross, cyano, sulfonate, sulfate

**C. DOCUMENTS CONSIDERED TO BE RELEVANT**

| Category* | Citation of document, with indication, where appropriate, of the relevant passages | Relevant to claim No. |
|---|---|---|
| X | JP 2017157471 A (GS YUASA CORP.) 07 September 2017 (2017-09-07) description, paragraphs 11-84, and figures 1-5 | 1, 3-7, 18-20 |
| Y | JP 2017157471 A (GS YUASA CORP.) 07 September 2017 (2017-09-07) description, paragraphs 11-84, and figures 1-5 | 2, 8-17 |
| Y | CN 112151855 A (NINGDE AMPEREX TECHNOLOGY LTD.) 29 December 2020 (2020-12-29) description, paragraphs 121-165 | 2, 8-15 |
| Y | CN 104466246 A (SAMSUNG SDI CO., LTD.) 25 March 2015 (2015-03-25) description, paragraphs 27-86 | 12, 16-17 |
| X | CN 112054189 A (TOYOTA MOTOR CORP.) 08 December 2020 (2020-12-08) description, paragraphs 44-93, and figures 1-4 | 1, 3-7, 18-20 |
| Y | CN 112054189 A (TOYOTA MOTOR CORP.) 08 December 2020 (2020-12-08) description, paragraphs 44-93, and figures 1-4 | 2, 8-17 |
| X | CN 112582621 A (TOYOTA MOTOR CORP.) 30 March 2021 (2021-03-30) description, paragraphs 44-134, and figures 1-4 | 1, 3-7, 18-20 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **27 May 2022** | **13 June 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

International application No.
PCT/CN2021/122316

C. DOCUMENTS CONSIDERED TO BE RELEVANT

| Category* | Citation of document, with indication, where appropriate, of the relevant passages | Relevant to claim No. |
|---|---|---|
| Y | CN 112582621 A (TOYOTA MOTOR CORP.) 30 March 2021 (2021-03-30) description, paragraphs 44-134, and figures 1-4 | 2, 8-17 |
| X | CN 105190952 A (HITACHI AUTOMOTIVE SYSTEMS, LTD.) 23 December 2015 (2015-12-23) description, paragraphs 1 and 22-97, and figures 1-7 | 1, 3-7, 18-20 |
| Y | CN 105190952 A (HITACHI AUTOMOTIVE SYSTEMS, LTD.) 23 December 2015 (2015-12-23) description, paragraphs 1 and 22-97, and figures 1-7 | 2, 8-17 |
| A | JP 2007103356 A (MATSUSHITA ELECTRIC IND. CO., LTD.) 19 April 2007 (2007-04-19) entire document | 1-20 |

Form PCT/ISA/210 (second sheet) (January 2015)

**INTERNATIONAL SEARCH REPORT**
**Information on patent family members**

International application No.
**PCT/CN2021/122316**

| Patent document cited in search report | | | Publication date (day/month/year) | Patent family member(s) | | | Publication date (day/month/year) |
|---|---|---|---|---|---|---|---|
| JP | 2017157471 | A | 07 September 2017 | None | | | |
| CN | 112151855 | A | 29 December 2020 | None | | | |
| CN | 104466246 | A | 25 March 2015 | JP | 2015065155 | A | 09 April 2015 |
| | | | | KR | 20150033445 | A | 01 April 2015 |
| | | | | EP | 2851990 | A1 | 25 March 2015 |
| | | | | US | 2015086861 | A1 | 26 March 2015 |
| | | | | US | 9263766 | B2 | 16 February 2016 |
| | | | | KR | 101718062 | B1 | 20 March 2017 |
| | | | | EP | 2851990 | B1 | 23 August 2017 |
| | | | | JP | 6376875 | B2 | 22 August 2018 |
| | | | | CN | 104466246 | B | 30 July 2019 |
| CN | 112054189 | A | 08 December 2020 | JP | 2020202038 | A | 17 December 2020 |
| | | | | KR | 20200140726 | A | 16 December 2020 |
| | | | | US | 2020388856 | A1 | 10 December 2020 |
| CN | 112582621 | A | 30 March 2021 | JP | 2021044162 | A | 18 March 2021 |
| | | | | KR | 20210031394 | A | 19 March 2021 |
| | | | | US | 2021074994 | A1 | 11 March 2021 |
| | | | | DE | 102020211226 | A1 | 11 March 2021 |
| CN | 105190952 | A | 23 December 2015 | JP | WO2014162437 | A1 | 16 February 2017 |
| | | | | US | 2016043373 | A1 | 11 February 2016 |
| | | | | WO | 2014162437 | A1 | 09 October 2014 |
| JP | 2007103356 | A | 19 April 2007 | None | | | |

Form PCT/ISA/210 (patent family annex) (January 2015)